# EUROPÄISCHE PATENTANMELDUNG

(11) **EP 2 557 529 A1**
(43) Veröffentlichungstag der Anmeldung: **13.02.2013**
(21) Anmeldenummer: 11177177.0
(22) Anmeldetag: 10.08.2011
(51) Int. Cl.: G06Q 10/00

(54) **Verfahren zur Beförderung von Waren und Logistiksystem**

(71) Anmelder: Kraftverkehr Nagel GmbH & Co. KG, 33775 Versmold (DE)
(72) Erfinder: Enns, Viktor, 33775 Versmold (DE)
(74) Vertreter: UEXKÜLL & STOLBERG

(57) **Zusammenfassung**

Die vorliegende Erfindung bezieht sich auf ein Verfahren und ein System zur Beförderung einer Vielzahl von Waren entlang einer Abgangs- (3) und/oder Eingangssammellager umfassenden logistischen Prozesskette von Absendern (1) zu Empfängern (2). Waren jedes Absenders (1) werden mittels Transportfahrzeugen zu einem dem Absender (1) zugeordneten Abgangssammellager (3) oder direkt zu einem dem Empfänger (2) zugeordneten Eingangssammellager (4) transportiert, wobei in den Lagern (2, 3) eine geeignete Sortierung stattfindet. Dabei wird jeder Ware mindestens ein körperliches, warenbezogenes Dokument körperlich zugeordnet, das zusammen mit der entsprechenden Ware zum Empfänger (2) transportiert und diesem übergeben wird. An einer zentralen Datenverarbeitungseinrichtung (13) werden jeweils einem der körperlichen Dokumente entsprechende elektronische Dateien über ein Datenübertragungsnetz (15) empfangen, die eine elektronische Kennung aufweisen, auf deren Basis automatisch der der elektronischen Datei entsprechende Absender (1) und Empfänger (2) und die dieser entsprechende Ware oder Gruppe von Waren ermittelt werden kann. In jedem Eingangssammellager (4) und/oder in jedem Abgangssammellager (3) erhält eine dort angeordnete Transformationseinrichtung (8) mittels elektronischer Datenübertragung die zugehörigen elektronischen Dateien und transformiert diese in die entsprechenden körperlichen Dokumente zur körperlichen Zuordnung zu der entsprechenden Ware oder Gruppe von Waren, indem die elektronischen Dateien von der Transformationseinrichtung (8) auf einem Drucker ausgedruckt oder auf einem körperlichen Datenträger gespeichert werden.

## Beschreibung

Die vorliegende Erfindung bezieht sich auf ein Verfahren zur Beförderung einer Vielzahl von Waren entlang einer logistischen Prozesskette von Absendern zu jeweiligen Empfängern und auf ein Logistiksystem zur Verwendung in einem solchen Verfahren.

Beim Transport von Waren von Absendern zu Empfängern durch ein Logistikunternehmen besteht regelmäßig der Wunsch oder die Notwendigkeit, dass die Waren bei den Empfängern zusammen mit Schriftstücken übergeben werden, von denen sich jedes auf eine einzelne Ware oder auf eine Gruppe von Waren, d.h. auf eine Lieferung, bezieht und dieser zugeordnet ist. Diese Schriftstücke können beispielsweise Lieferscheine sein, die von den Absendern für jede einzelne Lieferung ausgestellt und zusätzlich zu den Waren der Lieferung von den Absendern an das Logistikunternehmen übergeben werden. Die Empfänger können zum Beispiel mit Hilfe der Lieferscheine den Erhalt der Waren für die Absender quittieren, indem die Lieferscheine zusammen mit den entsprechenden Waren bei den Empfängern abgeliefert und von den Empfängern nach Prüfung der Vollständigkeit der erhaltenen Lieferung abgezeichnet werden. Darüber hinaus können auch noch weitere Schriftstücke existieren, die von den Absendern an das Logistikunternehmen übergeben werden, sich auf eine einzelne Ware oder Gruppe von Waren beziehen und zusammen mit den entsprechenden Waren bis zum Zielort transportiert werden, aber nicht an die Empfänger übergeben, sondern vorher von den zugeordneten Waren getrennt werden.

Derartige Schriftstücke müssen somit im Prinzip den gleichen Transportweg wie die entsprechenden Waren gehen.

Insbesondere im Bereich der Lebensmittellogistik aufgrund auftragsbezogener Produktion und zeitkritischen Transports besteht in diesem Zusammenhang die Schwierigkeit, dass zum Zeitpunkt der Abholung einer bestimmten Warenladung beim Absender durch das Logistikunternehmen die zugehörigen Schriftstücke häufig noch nicht fertiggestellt worden und damit noch nicht verfügbar sind. So besteht regelmäßig die Praxis, dass alle Schriftstücke, wie zum Beispiel Lieferscheine, die sich auf die von dem Logistikunternehmen während eines Tages oder eines anderen Zeitraums bei dem Absender abgeholten Waren beziehen, am Ende dieses Tages bzw. Zeitraums gesammelt an das Logistikunternehmen übergeben werden, z.B. wenn die letzte Warenladung des Tages bzw. Zeitraums abgeholt wird. Die Schriftstücke und die zugehörigen Waren werden somit zumindest teilweise separat in die logistische Prozesskette eingegeben und müssen zumindest einen Teil des Weges entlang der logistischen Prozesskette getrennt zurücklegen.

Aber selbst dann, wenn derartige Schriftstücke, wie zum Beispiel Lieferscheine, vom Absender zusammen mit den zugehörigen Waren an das Logistikunternehmen übergeben werden, werden die Waren und Schriftstücke häufig in den nachfolgend beschriebenen Abgangssammellagern getrennt, auf separaten Wegen zu den ebenfalls nachfolgend beschriebenen Eingangssammellagern transportiert und erst dort wieder zusammengeführt. Dieser separate Transport der Waren und Schriftstücke erfolgt aus praktischen Gesichtspunkten, da es aufgrund der regelmäßig sehr großen Anzahl der zu befördernden Waren nicht effizient möglich ist, die Schriftstücke und die Waren zusammen logistisch zu transportieren.

Der Teil der logistischen Prozesskette von einem bestimmten Absender zu einem bestimmten Empfänger umfasst typischerweise eines von mehreren sog. Abgangssammellagern und eines von mehreren sog. Eingangssammellagern. Diese Sammellager sind regional verteilt und dienen zur regionalen Sammlung der von verschiedenen Absendern abgeholten Waren bzw. der zu verschiedenen Empfängern zu transportierenden Waren. Dabei werden die von einem bestimmten Absender abgeholten Waren in einem ersten Schritt zu dem nächstgelegenen Abgangssammellager gebracht. In jedem Abgangssammellager werden die dort gesammelten Waren den verschiedenen Eingangssammellagern zugeordnet, die jeweils den Empfängern regional am nächsten liegen. Die einem Eingangssammellager zugeordneten Waren werden dann zusammen zu dem Eingangssammellager transportiert, dort in verschiedene Transportfahrzeuge umgeladen und schließlich zu den einzelnen Empfängern gebracht. Aus Effizienzgründen können alle Abgangssammellager oder kann zumindest ein Teil der Abgangssammellager gleichzeitig als Eingangssammellager dienen, so dass jeweils ein Paar von Ab- und Eingangssammellager durch ein gemeinsames Lager gebildet wird. Dann entfällt der Transport von Waren vom Abgangssammellager zum Eingangssammellager in den Fällen, in denen der Absender und der Empfänger demselben derartigen gemeinsamen Lager regional am nächsten liegen.

In Einzelfällen können Abweichungen von dem obigen typischen Transportverlauf vorgesehen werden. So kann es häufig effizienter sein, bei großen Warenmengen, die von demselben Absender zu einem bestimmten Empfänger transportiert werden müssen, einen Teil des typischen Transportverlaufs bzw. der oben beschriebenen Prozesskette zu überspringen, indem die Waren ohne den Umweg über das dem Empfänger zugeordnete Eingangssammellager direkt vom jeweiligen Abgangssammellager zum Empfänger transportiert werden oder indem die Waren ohne den Umweg über das dem Absender zugeordnete Abgangssammellager direkt vom jeweiligen Absender zum dem Empfänger zugeordneten Eingangssammellager transportiert werden.

Durch die oben beschriebene separate Einführung der Waren und der zugehörigen Schriftstücke in die logistische Prozesskette ergibt sich das Problem, dass die Waren und Schriftstücke nicht nur getrennt bei den Absender abgeholt und in das Abgangssammellager - oder direkt in das Eingangssammellager - verbracht werden, sondern dass sie im typischen Fall auch im Abgangssammellager separat sortiert und in die zugeordneten Eingangssammellager transportiert werden müssen. Die letzteren beiden Schwierigkeiten ergeben sich im typischen Fall auch bei dem gemeinsamen Transport der Waren und Schriftstücke in das Abgangssammellager nach der dortigen Trennung. In den Eingangsammellagern ist dann zur Zuordnung der Schriftstücke zu den zugehörigen Waren eine weitere Sortierung erforderlich. Dasselbe gilt für die Zuordnung ggf. vorhandener verschiedenartiger Schriftstücke, die sich auf die Waren beziehen, zueinander, wie beispielsweise Lieferscheine und Speditionsaufträge, die gemeinsam den zugehörigen Waren zugeordnet werden müssen. In Fällen des Direkttransports aus einem Abgangssammellager zu einem Empfänger besteht immer noch die Schwierigkeit der separaten Sortierung.

Die große Anzahl dieser Schritte ist sehr zeitaufwändig, und außerdem treten regelmäßig weitere Zeitverzögerungen auf, weil am Ende eines Tages vor den letzten Fahrten in die verschiedenen Eingangssammellager sowie auch beim Direkttransport von einem Abgangssammellager zu einem Empfänger auf die Schriftstücke gewartet werden muss. Der Warentransport wird somit verlangsamt und ineffizient gemacht, was insbesondere im Bereich auftragsbezogener Produktion und zeitkritischen Transports, wie zum Beispiel in der Lebensmittellogistik problematisch ist. Zudem ist es praktisch unmöglich, in den Abgangssammellagern zu überprüfen, ob es zu jeder Ware ein Schriftstück und zu jedem Schriftstück eine Ware gibt, und in den Eingangssammellagern ist dies nur mit hohem manuellen Aufwand möglich. Insgesamt ist diese Vorgehensweise mit einem großen Zeit-, Personal- und Kostenaufwand verbunden und sehr fehleranfällig. So kann es insbesondere zu Fehlleitungen etwa infolge von Fehlern bei der Sortierung in den Abgangssammellagern oder den Eingangssammellagern kommen. Im Fall von Lieferscheinen führt das Fehlen bei der Ankunft der Waren beim Empfänger dazu, dass die Waren nicht angenommen werden. Die Suche nach fehlenden Schriftstücken ist sehr aufwändig, und die ggf. erforderliche Neuausstellung der Schriftstücke durch den Absender führt zu einer erheblichen Zeitverzögerung, d.h. zu einer Verlängerung der Dauer zwischen der Abgabe der Waren durch den Absender und ihrer Ankunft beim Empfänger.

Es ist Aufgabe der Erfindung ein Verfahren zur Beförderung einer Vielzahl von Waren und zugeordneter Schriftstücke entlang einer logistischen Prozesskette von Absendern zu jeweiligen Empfängern und ein Logistiksystem zur Verwendung in einem solchen Verfahren bereitzustellen, durch die der Zeitraum zwischen der Absendung der Waren durch die Absender und dem Eintreffen der Waren bei den Empfängern verkürzt und der Personal- und Kostenaufwand reduziert werden kann.

Diese Aufgabe wird durch ein Verfahren mit den Merkmalen des Anspruchs 1 und ein Logistiksystem mit den Merkmalen des Anspruchs 13 gelöst. Vorteilhafte Ausgestaltungen des Verfahrens und des Systems sind Gegenstand der jeweils zugehörigen Unteransprüche.

Eine logistische Prozesskette, entlang derer eine Vielzahl von Waren von Absendern zu jeweiligen Empfängern transportiert wird, umfasst in der oben beschriebenen Weise ein oder bevorzugt mehrere Abgangssammellager und/oder ein oder bevorzugt mehrere Eingangssammellager. Dabei ist es bevorzugt, wenn sowohl ein oder bevorzugt mehrere Abgangssammellager als auch ein oder bevorzugt mehrere Eingangssammellager vorhanden sind. In diesem bevorzugten Fall können das bzw. die Eingangssammellager räumlich von dem Abgangssammellager oder den Abgangssammellagern entfernt sein. Es ist jedoch von Vorteil, wenn einige oder alle Abgangssammellager zusammen mit jeweils genau einem der Eingangssammellager durch ein gemeinsames Lager gebildet werden, d.h. dass dann jeweils ein Abgangssammellager und ein Eingangssammellager räumlich nicht voneinander getrennt sind. In jedem Fall ist jedem Abgangssammellager mindestens einer der Absender, bevorzugt regional, zugeordnet, und jedem Eingangssammellager ist, bevorzugt regional, mindestens einer der Empfänger zugeordnet. Dabei ist es bevorzugt, wenn jeder der Absender, bevorzugt regional, einem und bevorzugt genau einem der Abgangssammellager zugeordnet ist, und jeder der Empfänger, bevorzugt regional, einem und bevorzugt genau einem der Eingangssammellager zugeordnet ist. Aus der obigen Darstellung ergibt sich, dass der Begriff der logistischen Prozesskette im Rahmen der vorliegenden Anmeldung nicht nur einen speziellen Weg zwischen einem bestimmten Absender zu einem bestimmten Empfänger bezeichnet, sondern weit zur Bezeichnung aller möglichen Transportwege von einer Vielzahl von Absendern zu einer Vielzahl von Empfängern verwendet wird.

In Abhängigkeit davon, ob nur Abgangssammellager, nur Eingangssammellager oder in vorteilhafter Weise sowohl Abgangsals auch Eingangssammellager vorgesehen sind, können Waren in der oben bereits beschriebenen Weise von den Absendern auf verschiedenen Wegen zu den jeweiligen Empfängern transportiert werden. Im ersten Fall werden alle Waren von den Absendern zunächst in ein Abgangssammellager gebracht und anschließend zu den Empfängern transportiert, im zweiten Fall werden all Waren von den Absendern zunächst in ein Eingangssammellager gebracht und anschließend zu den Empfängern transportiert, und im dritten Fall werden Waren entweder von ihrem Absender zu einem Abgangssammellager, dann zu einem Eingangssammellager und schließlich zum Empfänger transportiert oder legen einen der für die ersten beiden Fälle genannten Wege unter Auslassung von Abgangs- oder Eingangssammellager zurück. Dabei können im dritten Fall für verschiedene Waren in Abhängigkeit von Effizienzerwägungen unterschiedliche der drei verfügbaren Möglichkeiten genutzt werden, wie es ebenfalls bereits oben erläutert worden ist.

Bei der Möglichkeit des Transports über Abgangssammellager und Eingangssammellager werden die jeweiligen Waren jedes Absenders zunächst mit Hilfe eines oder - insbesondere bei zeitlich verteilter Absendung - mehrerer Transportfahrzeuge zum dem jeweiligen Absender zugeordneten Abgangssammellager transportiert und dort ausgeladen. Anschließend werden sie in dem jeweiligen Abgangssammellager nach dem Eingangssammellager sortiert, das dem Empfänger der jeweiligen Ware zugeordnet ist. Dann werden - mit Ausnahme des Falls, dass das jeweilige Eingangssammellager und das jeweilige Abgangssammellager räumlich nicht getrennt sind, sondern durch ein gemeinsames Lager gebildet werden, aus jedem Abgangssammellager für jedes Eingangssammellager die letzterem entsprechenden Waren mit Hilfe eines oder mehrerer Transportfahrzeuge zu dem jeweiligen Eingangssammellager transportiert und dort ausgeladen. Schließlich werden in jedem Eingangssammellager die betreffenden ausgeladenen Waren nach den Empfängern der Waren oder nach Gruppen von Empfängern der Waren sortiert und mit Hilfe eines oder mehrerer Transportfahrzeugs zu den jeweiligen Empfängern transportiert. Es ist ersichtlich, dass diese einzelnen Schritte kontinuierlich im Wechsel stattfinden, da ständig neue Waren von den Absendern abgesendet und zu den Empfängern transportiert werden.

Bei der Möglichkeit des direkten Transports vom Empfänger zu einem Eingangssammellager - wobei sich der Begriff des direkten Transports darauf bezieht, dass kein Transport zu einem Abgangssammellager stattfindet, und nicht ausschließt, dass ggf. Waren auf dem Weg von einem Transportfahrzeug in ein anderes umgeladen oder zwischengelagert werden - werden die jeweiligen Waren jedes Absenders zunächst mit Hilfe eines oder - insbesondere bei zeitlich verteilter Absendung - mehrerer Transportfahrzeuge direkt zum dem jeweiligen Empfänger zugeordneten Eingangssammellager transportiert und dort ausgeladen. Schließlich werden in jedem Eingangssammellager die betreffenden ausgeladenen Waren nach den Empfängern der Waren oder nach Gruppen von Empfängern der Waren sortiert und mit Hilfe eines oder mehrerer Transportfahrzeugs zu den jeweiligen Empfängern transportiert. Auch hier finden diese einzelnen Schritte kontinuierlich im Wechsel statt, da ständig neue Waren von den Absendern abgesendet und zu den Empfängern transportiert werden.

Bei der Möglichkeit des direkten Transports aus einem Abgangssammellager zu einem Empfänger - wobei sich der Begriff des direkten Transports darauf bezieht, dass kein Transport zu einem Eingangssammellager stattfindet, und nicht ausschließt, dass ggf. Waren auf dem Weg von einem Transportfahrzeug in ein anderes umgeladen oder zwischengelagert werden - werden die jeweiligen Waren jedes Absenders zunächst mit Hilfe eines oder - insbesondere bei zeitlich verteilter Absendung - mehrerer Transportfahrzeuge zum dem jeweiligen Absender zugeordneten Abgangssammellager transportiert und dort ausgeladen. Anschließend werden sie in dem jeweiligen Abgangssammellager nach dem Empfänger sortiert. Schließlich werden in jedem Abgangssammellager die betreffenden Waren mit Hilfe eines oder mehrerer Transportfahrzeugs zu den jeweiligen Empfängern transportiert. Auch hier finden diese einzelnen Schritte kontinuierlich im Wechsel statt, da ständig neue Waren von den Absendern abgesendet und zu den Empfängern transportiert werden.

Es sei noch einmal betont, dass nur eine dieser Möglichkeiten vorgesehen sein kann oder dass zwei oder aber alle drei dieser Möglichkeiten gleichzeitig vorgesehen sein können, wobei sie dann für verschiedene Waren nebeneinander verwirklicht werden. Es ist bevorzugt, wenn sowohl mindestens ein Eingangssammellager als auch mindestens ein Abgangssammellager vorhanden ist und wenn jedenfalls die erstgenannte Möglichkeit des Transports über Abgangssammellager und Eingangssammellager Verwendung findet. Bevorzugt stellt sie den typischen Transportweg bereit, von dem nur in Einzelfällen, beispielsweise aus Effizienzgründen, abgewichen wird, wie es oben erläutert worden ist, oder aber auch den einzigen Transportweg dar.

Sofern Eingangssammellager vorhanden sind, wird in jedem Eingangssammellager bei der Sortierung jeder Ware mindestens eines einer Vielzahl körperlicher Dokumente körperlich zugeordnet, von denen sich jedes auf eine Ware oder eine Gruppe von Waren bezieht, die von einem bestimmten Absender an einen bestimmten Empfänger gesendet werden. Gleiches gilt, sofern Abgangssammellager vorhanden sind, in dem Fall von Waren, die von einem Abgangssammellager direkt zu dem jeweiligen Empfänger transportiert werden sollen, bei der Sortierung nach dem Empfänger in dem mindestens einen Abgangssammellager. Eine Zuordnung von mehreren körperlichen Dokumenten zu einer Ware findet dann statt, wenn - wie oben bereits als Möglichkeit erwähnt worden ist - für die Waren mehrere verschiedenartige körperliche Dokumente vorhanden sind, wie zum Beispiel neben Lieferscheinen auch entsprechende Speditionsaufträge. Unter körperlichen Dokumenten sind bevorzugt Papierdokumente zu verstehen, aber die körperlichen Dokumente können auch körperliche Datenträger sein oder umfassen, auf denen jeweils ein Dokument in elektronischer Form gespeichert ist. Beispiele für körperliche Datenträger umfassen etwa optische oder magnetische Datenträger, Flashspeicher oder auch RFID-Etiketten. Die körperliche Zuordnung bedeutet, dass das körperliche Dokument in einen engen räumlichen Zusammenhang mit der betreffenden Ware oder Gruppe von Waren gebracht wird und bevorzugt in oder an dieser angeordnet oder befestigt wird. Auch umfasst ist aber die Möglichkeit, dass das körperliche Dokument zusammen mit der betreffenden Ware oder Gruppe von Waren zum Transport zum betreffenden Empfänger in demselben Transportfahrzeug angeordnet und in diesem Sinne der enge räumliche Zusammenhang hergestellt wird. Die körperlichen Dokumente haben bevorzugt einen durch den entsprechenden Absender bestimmten Inhalt, der Informationen umfasst, die sich auf die jeweiligen Waren beziehen, wie zum Beispiel die Art der Waren, die Anzahl der Waren, die Menge der Waren, der Absender und/oder der Empfänger.

Jede derartige Ware bzw. Gruppe von Waren wird zusammen mit dem mindestens einen zugeordneten körperlichen Dokument zum Empfänger transportiert, und diesem wird die jeweilige Ware bzw. Gruppe von Waren als Einheit zusammen mit einem oder mehreren der zugeordneten körperlichen Dokument übergeben.

Es ist vorgesehen, dass elektronische Dateien, von denen jede einem der körperlichen Dokumente entspricht und in einer bevorzugten Ausgestaltung zum Beispiel eine elektronische Repräsentation des körperlichen Dokuments in einem festgelegten Datenformat, wie zum Beispiel dem PDF-Format, ist, über ein Datenübertragungsnetz bevorzugt an einer zentralen Datenverarbeitungseinrichtung oder aber an mehreren zentralen Datenverarbeitungseinrichtungen empfangen werden. Solche zentralen Datenverarbeitungseinrichtungen sind bevorzugt als Server ausgestaltet und sind bevorzugt räumlich entfernt von den Abgangssammellagern und den Eingangssammellagern angeordnet. Es ist aber auch möglich, dass in einem, mehreren oder allen Abgangssammellagern und/oder in einem, mehreren oder allen Eingangssammellagern eine solche zentrale Datenverarbeitungseinrichtung angeordnet ist, ggf. zusätzlich zu einer oder mehreren zentralen Datenverarbeitungseinrichtungen, die räumlich entfernt von den Abgangssammellagern und den Eingangssammellagern angeordnet sind. Wie noch deutlich werden wird, bedeutet die Entsprechung der elektronischen Dateien und körperlichen Dokumente, dass jede elektronische Datei alle Informationen enthält, damit aus ihr das entsprechende elektronische Dokument durch Ausdrucken oder durch Speicherung auf einem körperlichen Datenträger erzeugt werden kann.

Jede elektronische Datei weist eine elektronische Kennung auf, auf Basis derer eine Datenverarbeitungseinrichtung, wie zum Beispiel eine der zentralen Datenverarbeitungseinrichtungen oder eine andere Datenverarbeitungseinrichtung, die beispielsweise in einem Abgangs- oder Eingangssammellager angeordnet sein kann, automatisch zumindest den der elektronischen Datei entsprechenden Absender und Empfänger und die dieser entsprechende Ware oder Gruppe von Waren ermitteln kann. Wie weiter unten noch erläutert wird, können die Informationen über den Empfänger - ggf. auch in verschlüsselter Form - unmittelbar in der Kennung enthalten sein, oder die Kennung kann Informationen enthalten, die unter Hinzuziehung weiterer Informationen die Ermittlung des Empfängers ermöglichen. Gleiches gilt für die Informationen über den Absender. Die elektronische Kennung kann in vorteilhafter Weise ein Teil der elektronischen Datei sein, zum Beispiel in Form eines Headers oder bevorzugt in Form ihres Dateinamens, aber kann auch eine separate, mit der elektronischen Datei verknüpfte und zusammen mit dieser übertragene und abgespeicherte Dateninformation sein.

Sofern Eingangssammellager vorgesehen sind, befindet sich in jedem Eingangssammellager eine Transformationseinrichtung zur Transformation elektronischer Dateien in die diesen entsprechenden körperlichen Dokumente, wobei die Transformationseinrichtung, bevorzugt automatisch, mittels elektronischer Datenübertragung diejenigen elektronischen Dateien erhält, die Empfängern entsprechen, die dem jeweiligen Eingangssammellager zugeordnet sind. Jede solche Transformationseinrichtung, die beispielsweise eine Datenverarbeitungseinrichtung bzw. ein Computer mit einem angeschlossenen Drucker oder einer angeschlossenen Speichereinrichtung oder lediglich ein Drucker oder eine Speichereinrichtung sein kann, transformiert, bevorzugt selbsttätig - wie zum Beispiel automatisch unmittelbar nach dem Erhalt oder gruppenweise in bestimmten Zeitabständen - die elektronischen Dateien in die diesen entsprechenden körperlichen Dokumente zur körperlichen Zuordnung zu der entsprechenden Ware oder Gruppe von Waren, indem die elektronischen Dateien von der Transformationseinrichtung bevorzugt auf einem Drucker ausgedruckt oder aber mit einer Speichervorrichtung jeweils auf einem körperlichen Datenträger gespeichert werden.

Diese Transformationseinrichtungen erhalten die betreffenden elektronischen Dateien und bevorzugt entweder direkt zur Transformation über ein Datenübertragungsnetz von der oder einer der zentralen Datenverarbeitungseinrichtungen oder - wie weiter unten noch detailliert erläutert wird - durch Abruf aus einer zentralen Datenbank. Sofern Abgangssammellager vorhanden sind, ist es aber auch möglich, dass diese Transformationseinrichtungen die betreffenden elektronischen Dateien von der oder einer der zentralen Datenverarbeitungseinrichtungen über ein Datenübertragungsnetz über den Umweg über eine Datenverarbeitungseinrichtung erhalten, von denen eine in jedem oder zumindest einigen der Abgangssammellager vorgesehen ist. In diesem Fall ist es auch möglich, dass derartige Datenverarbeitungseinrichtungen jeweils eine dezentrale Datenbank führen, in der die sich auf das jeweilige Abgangssammellager beziehenden elektronischen Dateien von der betreffenden Datenverarbeitungseinrichtung selbsttätig gespeichert werden, und die Transformationseinrichtungen die sie betreffenden elektronischen Dateien nicht direkt von der Datenverarbeitungseinrichtung im Abgangssammellager, sondern durch Abruf aus der dezentralen Datenbank erhalten. Schließlich können die elektronischen Dateien auf einem der genannten Wege auch zunächst von einer Datenverarbeitungseinrichtung in dem betreffenden Eingangssammellager in einer dort vorgesehenen dezentralen Datenbank gespeichert und von der dortigen Transformationseinrichtung aus dieser abgerufen werden. Weist eine der Transformationseinrichtungen eine Datenverarbeitungseinrichtung bzw. einen Computer auf, so kann diese bzw. dieser identisch mit der Datenverarbeitungseinrichtung sein, mit deren Hilfe die elektronischen Dateien in einer dezentralen Datenbank in dem betreffenden Eingangssammellager gespeichert werden. Die genannten elektronischen Datenübertragungen finden genau wie die im weiteren Verlauf geschilderten elektronischen Datenübertragungen bevorzugt automatisch statt, wobei die Steuerung der Datenübertragung in vorteilhafter Weise z.B. von der zentralen Datenverarbeitungseinrichtung oder den bzw. einer oder mehreren der zentralen Datenverarbeitungseinrichtungen vorgenommen werden kann.

Sofern Abgangssammellager vorgesehen sind und von der Möglichkeit eines Direkttransports von den Abgangssammellagern zu Empfängern Gebrauch gemacht wird, befindet sind in ähnlicher Weise in jedem Abgangssammellager bzw. in jedem Abgangssammellager aus dem ein Direkttransport möglich sein soll, eine Transformationseinrichtung zur Transformation elektronischer Dateien in die diesen entsprechenden körperlichen Dokumente, die den erstgenannten Transformationseinrichtungen entspricht und identisch zu diesen aufgebaut sein und arbeiten kann. Für den Fall von Waren, die von dem jeweiligen Abgangssammellager direkt zu dem jeweiligen Empfänger transportiert werden sollen, erhält jede dieser Transformationseinrichtungen mittels elektronischer Datenübertragung diejenigen elektronischen Dateien, die einem körperlichen Dokument entsprechen, das sich auf eine der Waren oder eine Gruppe der Waren bezieht, für die der Direkttransport stattfinden soll, und transformiert, bevorzugt selbsttätig - wie zum Beispiel automatisch unmittelbar nach dem Erhalt oder gruppenweise in bestimmten Zeitabständen - die elektronischen Dateien in die diesen entsprechenden körperlichen Dokumente zur körperlichen Zuordnung zu der entsprechenden Ware oder Gruppe von Waren, indem die elektronischen Dateien von der Transformationseinrichtung bevorzugt auf einem Drucker ausgedruckt oder aber mit einer Speichervorrichtung jeweils auf einem körperlichen Datenträger gespeichert werden. Für Waren, für die ein solcher Direkttransport stattfinden soll, wird bevorzugt eine entsprechende elektronische Mitteilung an die zentrale Datenverarbeitungseinrichtung bzw. Datenverarbeitungseinrichtungen gesandt, so dass bei der elektronischen Datenübertragung der den betreffenden Waren entsprechenden elektronischen Dateien automatisch berücksichtigt werden kann, dass diese zum jeweiligen Abgangssammellager übertragen werden müssen. Solche elektronischen Mitteilungen können automatisch durch die jeweilige Transformationseinrichtung oder eine in dem jeweiligen Abgangssammellager angeordnete DatenVerarbeitungseinrichtung erzeugt und gesandt werden oder auf Veranlassung eines Nutzers, der über den Transportweg einer Ware oder Gruppe von Waren entscheidet. Wie weiter unten noch erläutert wird, ist es aber auch möglich, dass die Transformationseinrichtung oder eine in dem jeweiligen Abgangssammellager angeordnete Datenverarbeitungseinrichtung, bevorzugt automatisch, die betreffenden elektronischen Dateien von einer der zentralen Datenverarbeitungseinrichtungen oder aus einer zentralen Datenbank abruft oder deren Übertragung durch eine der zentralen Datenverarbeitungseinrichtungen anstößt.

Auch diese Transformationseinrichtungen erhalten die betreffenden elektronischen Dateien bevorzugt entweder direkt zur Transformation über ein Datenübertragungsnetz von der oder einer der zentralen Datenverarbeitungseinrichtungen oder - wie ebenfalls weiter unten noch detailliert erläutert wird - auf eine der für die erstgenannten Transformationseinrichtungen geschilderten Weisen.

Sofern mehrere der möglichen Transportwege vorgesehen sind bzw. möglich sein sollen, d.h. ein Transport über Abgangs- und Eingangssammellager, ein Direkttransport nur über ein Abgangssammellager und/oder ein Direkttransport nur über ein Eingangssammellager, so ist es bevorzugt, wenn von der zentralen Datenverarbeitungseinrichtung bzw. den oder einer oder einigen der zentralen Datenverarbeitungseinrichtungen Informationen darüber gesammelt bzw. gespeichert werden, welchen Transportweg die einzelnen Waren bzw. Gruppen von Waren nehmen sollen. Diese Informationen können beispielsweise durch die oben bereits erwähnten elektronischen Mitteilungen geliefert, durch Nutzer eingegeben oder, etwa durch eine der zentralen Datenverarbeitungseinrichtungen, selbsttätig aus den elektronischen Kennungen ausgelesen werden, wenn in diesen entsprechende Informationen vorgesehen werden. Bei Eingabe durch einen Nutzer kann diese beispielsweise an einer zentralen Datenverarbeitungseinrichtung oder bevorzugt an einer Datenverarbeitungseinrichtung in einem Abgangssammellager oder - falls solche nicht vorhanden sind - in einem Eingangssammellager stattfinden und mittels elektronischer Datenübertragung an eine der zentralen Datenverarbeitungseinrichtungen gesandt werden. Es ist auch möglich, dass nur Abweichungen von dem dann als typisch bzw. Standard definierten Transportweg über Abgangs- und Eingangssammellager gespeichert bzw. erfasst werden.

Durch die dargestellte Vorgehensweise werden die Transportwege von Waren und den Waren zugeordneten Dokumenten in vorteilhafter Weise getrennt. Die Dokumente werden in elektronischer Form einer oder mehreren zentralen Datenverarbeitungseinrichtungen zugeführt, die allen Abgangssammellagern gemeinsam ist bzw. sind und sich insbesondere an einem von diesen entfernten Ort befinden kann bzw. können. Dadurch, dass die körperlichen Dokumente - mit Ausnahme der Fälle von Waren, die direkt von einem Abgangssammellager zu einem Empfänger transportiert werden - erst in den jeweiligen Eingangssammellagern in ihre körperliche Form gebracht werden, entfallen diesbezügliche nachteilige Arbeits- und Sortierschritte in den Abgangssammellagern und eine automatisierte Verarbeitung in den Eingangssammellagern wird stark vereinfacht. Auf diese Weise kann ein großer Zeit- und Kostenvorteil erreicht werden. Ferner ergeben sich in den Eingangssammellagern die Vorteile, dass die körperlichen Dokumente regelmäßig früher eintreffen und damit weniger zeitkritisch weiterverarbeitet werden können, dass das manuelle Zusammensortieren verschiedenartiger Typen körperlicher Dokumente wie etwa das Zusammensortieren von Lieferscheinen und entsprechenden Speditionsaufträgen entfällt und dass es in einfacher Weise möglich ist, die Vollständigkeit der körperlichen Dokumente in Bezug auf die auszuliefernden Waren zu prüfen.

In einer bevorzugten Ausführungsform speichert bzw. speichern die zentrale Datenverarbeitungseinrichtung bzw. die zentralen Datenverarbeitungseinrichtung die von ihnen empfangenen elektronischen Dateien selbsttätig zusammen mit den elektronischen Kennungen in einer zentralen Datenbank ab, d.h. einer Datenbank, auf die zumindest alle zentralen Datenverarbeitungseinrichtungen Zugriff haben. Es ist dabei bevorzugt, wenn durch eindeutige Zuordnung der elektronischen Dateien nach bestimmten Kriterien, die zum Beispiel auf Basis der elektronischen Kennungen ermittelt werden, durch Kommunikation unter den zentralen Datenverarbeitungseinrichtungen oder durch eine von jeder zentralen Datenverarbeitungseinrichtung vorzunehmende automatische Überprüfung jede elektronische Datei nur durch genau eine zentrale Datenverarbeitungseinrichtung abgespeichert wird. In dieser zentralen Datenbank können auch die oben angegebenen Informationen darüber gesammelt werden bzw. gespeichert sein, welche Waren bzw. Gruppen von Waren dem Transportweg einschließlich eines Abgangssammellagers und eines Eingangssammellagers nehmen sollen und für welche Waren bzw. Gruppen von Waren ein Direkttransport unter Auslassung des Abgangs- oder Eingangssammellagers stattfinden soll.

Wie bereits erwähnt wurde und wie weiter unten noch näher erläutert wird, kann alternativ oder zusätzlich zur Speicherung in der zentralen Datenbank auch eine Speicherung der elektronischen Dateien in separaten, dezentralen Datenbanken in den einzelnen Abgangs- und/oder Eingangssammellagern vorgesehen sein, wobei bevorzugt in jedem der vorhandenen Abgangs-und/oder Eingangssammellager nur diejenigen elektronischen Dateien gespeichert werden, die mit dem jeweiligen Sammellager in Zusammenhang stehen (zur Ermittlung der Abgangssammellager enthalten die elektronischen Kennungen beispielsweise Informationen, auf deren Basis computergestützt und vorteilhaft automatisch der Absender bzw. das Abgangssammellager ermittelt werden kann). Zur dezentralen Speicherung in den Sammellagern werden die elektronischen Dateien von der oder den zentralen Datenverarbeitungseinrichtungen über ein Datenübertragungsnetz an dezentrale Datenverarbeitungseinrichtungen in den jeweiligen Sammellagern übertragen und von diesen in der jeweiligen dezentralen Datenbank abgespeichert. Sind dezentrale Datenbanken sowohl in den Abgangssammellagern als auch in den Eingangssammellagern vorgesehen, so kann die dezentrale Speicherung auch in der Weise erfolgen, dass die elektronischen Dateien von der oder den zentralen Datenverarbeitungseinrichtungen über ein Datenübertragungsnetz an Datenverarbeitungseinrichtungen in den jeweiligen Abgangssammellagern übertragen werden, von diesen in der jeweiligen dezentralen Datenbank des Abgangssammellagers abgespeichert und über ein Datenübertragungsnetz an Computer in den jeweiligen Eingangssammellagern weiter übertragen werden und schließlich von letzteren Computern in der jeweiligen dezentralen Datenbank des Eingangssammellagers abgespeichert werden. Auch diese Schritte finden vorteilhaft automatisch statt.

In einer vorteilhaften Ausgestaltung des Verfahrens erhält jede der erwähnten, in einem Eingangssammellager befindlichen Transformationseinrichtungen diejenigen elektronischen Dateien, die Empfängern entsprechen, die dem jeweiligen Eingangssammellager zugeordnet sind, indem für jede der elektronischen Dateien, die an der zentralen Datenverarbeitungseinrichtung bzw. den zentralen Datenverarbeitungseinrichtungen empfangen wird, oder zumindest für jede eines Teil dieser elektronischen Dateien eine der zentralen Datenverarbeitungseinrichtungen selbsttätig auf Basis der elektronischen Kennung der elektronischen Datei den dieser entsprechenden Empfänger und anhand des Empfängers das entsprechende Eingangssammellager ermittelt und die elektronische Datei mit der elektronischen Kennung über ein Datenübertragungsnetz an die in diesem Eingangssammellager angeordnete Transformationseinrichtung überträgt, ggf. über den Umweg oder in Verbindung mit einer Speicherung in einer in dem Eingangsammellager vorgesehenen dezentralen Datenbank. Mit anderen Worten werden die elektronischen Kennungen von einer zentralen Datenverarbeitungseinrichtung analysiert, um unmittelbar oder mittelbar die Information über den jeweiligen Empfänger zu ermitteln. Anschließend bestimmt die jeweilige zentrale Datenverarbeitungseinrichtung anhand einer vorbestimmten, zum Beispiel in der zentralen Datenbank gespeicherten Zuordnung von Empfängern zu Eingangssammellagern das passende Eingangssammellager und sendet die elektronische Datei an die jeweilige dortige Transformationseinrichtung.

Abweichend dazu kann auch vorgesehen sein, dass die in der Kennung enthaltenen Informationen verwendet werden, auf Basis derer sich der Absender oder das diesem zugeordnete Abgangssammellager ermitteln lässt. Die jeweilige zentrale Datenverarbeitungseinrichtung ermittelt dann selbsttätig auf Basis der elektronischen Kennung der elektronischen Datei den dieser entsprechenden Absender bzw. das dieser entsprechende Abgangssammellager und überträgt die elektronische Datei mit der elektronischen Kennung über ein Datenübertragungsnetz an eine in der bereits beschrieben Weise in diesem Abgangssammellager angeordnete Datenverarbeitungseinrichtung. Diese ermittelt dann selbsttätig - ggf. nach Speicherung der elektronischen Datei mit der Kennung in einer durch sie geführten dezentralen Datenbank - auf Basis der elektronischen Kennung den der elektronischen Datei entsprechenden Empfänger und anhand des Empfängers das entsprechende Eingangssammellager und überträgt die jeweilige elektronische Datei mit der elektronischen Kennung über ein Datenübertragungsnetz an die in diesem Eingangssammellager angeordnete Transformationseinrichtung. Von der erstgenannten Möglichkeit unterscheidet sich dieses Vorgehen somit dadurch, dass die Datenübertragung nicht direkt zwischen zentraler Datenverarbeitungseinrichtung und Eingangssammellager stattfindet, sondern über den Umweg der Abgangssammellager.

In einer verwandten und ggf. kombinierten vorteilhaften Ausgestaltung des Verfahrens erhält jede der erwähnten, in einem Abgangssammellager befindlichen Transformationseinrichtungen diejenigen elektronischen Dateien, die Waren entsprechen, die von dem jeweiligen Abgangssammellager direkt zu dem jeweiligen Empfänger transportiert werden sollen, indem für jede solcher elektronischen Dateien, die an der zentralen Datenverarbeitungseinrichtung bzw. den zentralen Datenverarbeitungseinrichtungen empfangen wird, oder zumindest für jede eines Teil dieser elektronischen Dateien eine der zentralen Datenverarbeitungseinrichtungen selbsttätig die elektronischen Dateien über ein Datenübertragungsnetz an die jeweilige Transformationseinrichtung in dem Abgangssammellager überträgt, das dem der jeweiligen elektronischen Datei zugeordneten Absender entspricht. Mit anderen Worten werden die elektronischen Kennungen von einer zentralen Datenverarbeitungseinrichtung analysiert, um unmittelbar oder mittelbar die Information über den jeweiligen Absender zu ermitteln und bevorzugt auch um festzustellen, ob für die betreffenden Waren ein Direkttransport vorgesehen ist. Anschließend bestimmt der jeweilige Zentralcomputer anhand einer vorbestimmten, zum Beispiel in der zentralen Datenbank gespeicherten Zuordnung von Absendern zu Abgangssammellagern das passende Abgangssammellager und sendet die elektronische Datei an die jeweilige dortige Transformationseinrichtung. Wie oben bereits erwähnt wurde, kann für Waren, für die ein solcher Direkttransport stattfinden soll, beispielsweise eine entsprechende elektronische Mitteilung an die zentrale Datenverarbeitungseinrichtung bzw. Datenverarbeitungseinrichtungen gesandt, so dass bei der elektronischen Datenübertragung der den betreffenden Waren entsprechenden elektronischen Dateien automatisch berücksichtigt werden kann, dass diese zum jeweiligen Abgangssammellager übertragen werden müssen.

In jedem dieser Fälle wird durch die betreffende Ausgestaltung eine automatische und schnelle Verteilung der elektronischen Dateien auf die richtigen Eingangssammellager bzw. auf die richtigen Abgangssammellager erreicht.

In einer alternativen oder ergänzenden vorteilhaften Ausgestaltung des Verfahrens, bei der von der erwähnten zentralen Datenbank Gebrauch gemacht wird, ermittelt genau wie in der ersteren Möglichkeit des vorhergehenden Falls eine der zentralen Datenverarbeitungseinrichtungen für jede der elektronischen Dateien, die an der zentralen Datenverarbeitungseinrichtung oder den zentralen Datenverarbeitungseinrichtungen empfangen wird, oder zumindest für jede eines Teils dieser Dateien selbsttätig in der bereits beschriebenen Weise auf Basis der elektronischen Kennung der elektronischen Datei den dieser entsprechenden Empfänger und anhand des Empfängers das entsprechende Eingangssammellager. Anschließend überträgt sie jedoch nicht die elektronische Datei selbst, sondern eine elektronische Nachricht mit der elektronischen Kennung über ein Datenübertragungsnetz an die in dem betreffenden Eingangssammellager angeordnete Transformationseinrichtung. Diese und insbesondere eine in ihr enthaltene oder mit ihr verbundene DatenVerarbeitungseinrichtung ruft dann nach Empfang der Nachricht selbsttätig über ein Datenübertragungsnetz die der elektronischen Kennung entsprechende elektronische Datei aus der Datenbank ab. Alternativ oder zusätzlich ermittelt in ähnlicher Weise genau wie in der dritten Möglichkeit des vorhergehenden Falls eine der zentralen Datenverarbeitungseinrichtungen für jede der elektronischen Dateien, die an der zentralen Datenverarbeitungseinrichtung oder den zentralen Datenverarbeitungseinrichtungen empfangen wird, oder zumindest für jede eines Teils dieser Dateien selbsttätig in der bereits beschriebenen Weise auf Basis der elektronischen Kennung der elektronischen Datei den dieser entsprechenden Absender und anhand des Absenders das diesem zugeordnete Abgangssammellager und überträgt eine elektronische Nachricht mit der elektronischen Kennung über ein Datenübertragungsnetz an die in diesem Abgangssammellager angeordnete Transformationseinrichtung. In jedem Abgangssammellager ruft dann die dort angeordnete Transformationseinrichtung nach Empfang einer solchen Nachricht selbsttätig über ein Datenübertragungsnetz die der elektronischen Kennung entsprechende elektronische Datei aus der Datenbank ab. Ansonsten gilt selbes wie zuvor.

Diese Ausgestaltung kann von Vorteil sein, wenn die Transformationseinrichtungen in den Eingangssammellagern bzw. in den Abgangssammellagern den Datenverkehr über das Datenübertragungsnetz selbst steuern können sollen und zum Beispiel die relativ datenintensive Übertragung der elektronischen Dateien selbst nur zu bestimmten Zeiten stattfinden soll. Findet analog zu den oben beschriebenen Möglichkeiten zunächst ein Datenaustausch zwischen den zentralen Datenverarbeitungsrichtungen und Datenverarbeitungseinrichtungen in den Abgangssammellagern statt und führen letztere Datenverarbeitungseinrichtungen dezentrale Datenbanken, so können die Nachrichten auch von diesen Datenverarbeitungseinrichtungen gesendet werden und der Abruf durch die Transformationseinrichtungen aus den dezentralen Datenbanken erfolgen.

In einer weiteren alternativen oder ergänzenden vorteilhaften Ausgestaltung des Verfahrens, die ebenfalls von der erwähnten zentralen Datenbank Gebrauch macht, greift in jedem Eingangssammellager oder in einem Teil der Eingangssammellager die dort angeordnete Transformationseinrichtung und insbesondere eine in dieser enthaltene oder mit dieser verbundene Datenverarbeitungseinrichtung selbsttätig kontinuierlich oder bevorzugt in regelmäßigen oder auch unregelmäßigen, auf Basis vorbestimmter Kriterien, wie z.B. Arbeitslast, zu bestimmenden Zeitabständen über ein Datenübertragungsnetz auf die zentrale Datenbank zu. Dabei prüft sie anhand der elektronischen Kennungen der dort gespeicherten elektronischen Dateien, ob seit dem letzten Zugriff elektronische Dateien neu gespeichert wurden, die Empfängern entsprechen, die dem jeweiligen Eingangssammellager zugeordnet sind. Ist dies der Fall, so ruft sie die betreffenden elektronischen Dateien aus der Datenbank ab. Alternativ oder zusätzlich kann dieselbe Vorgehensweise auch für die Transformationseinrichtungen vorgesehen werden, die in zumindest einem Teil der Abgangssammellager angeordnet sind. Auch diese Ausgestaltung kann von Vorteil sein, wenn die Transformationseinrichtungen in den Eingangssammellagern bzw. Abgangssammellagern den Datenverkehr über das Datenübertragungsnetz selbst steuern können sollen und zum Beispiel die relativ datenintensive Übertragung der elektronischen Dateien selbst nur zu bestimmten Zeiten stattfinden soll. Außerdem können die zentralen Datenverarbeitungseinrichtungen - allerdings zu Lasten der Transformationseinrichtungen - von Arbeit entlastet werden. Auch in diesem Fall kann bei der erwähnten Verwendung dezentraler Datenbanken in den Abgangssammellagern der Abruf durch die Transformationseinrichtungen in derselben Weise aus den dezentralen Datenbanken erfolgen.

In den drei beschriebenen Fällen kann das Datenübertragungsnetz beispielsweise ein Telefonfestnetz, ein mobiles Telefonnetz, ein separates, z.B. firmeneigenes WAN oder bevorzugt das Internet sein, wobei die Datenübertragung drahtgebunden, drahtlos oder sowohl drahtgebunden als auch drahtlos vorgesehen sein kann. Die Übertragung kann beispielsweise über E-Mail erfolgen.

Es ist bevorzugt, wenn nur eine zentrale Datenverarbeitungseinrichtung vorgesehen ist, die zudem bevorzugt räumlich entfernt von den Eingangssammellagern und den Abgangssammellagern angeordnet ist. Auf diese Weise wird die Durchführung des Verfahrens vereinfacht. Mehrere zentrale Datenverarbeitungseinrichtungen können demgegenüber von Vorteil sein, um eine Redundanz der Datenverarbeitung und -speicherung bereitzustellen und Ausfallzeiten vorzubeugen. Dieser Vorteil kann zumindest zu einem gewissen Grad auch erreicht werden, indem in der oben dargelegten Weise Daten auch dezentral in Datenbanken in den Abgangs- und/oder Eingangssammellagern gespeichert und verarbeitet werden.

In einer bevorzugten Ausführungsform werden die erwähnten Sortierschritte in dem mindestens einen Abgangssammellager ganz oder teilweise automatisch mit Hilfe einer automatisierten Sortiervorrichtung durchgeführt und/oder die erwähnten Sortierschritte in dem mindestens einen Eingangssammellager ganz oder teilweise automatisch mit Hilfe einer automatisierten Sortiervorrichtung durchgeführt. Im letzteren Fall wird das Ausdrucken der elektronischen Dateien auf einem Drucker oder die Speicherung auf einem körperlichen Datenträger in der Weise durchgeführt, dass die körperlichen Dokumente maschinell lesbare Symbole aufweisen, die für die jeweilige elektronische Kennung charakteristisch sind. Die so vorbereiteten körperlichen Dokumente werden dann der automatisierten Sortiervorrichtung zugeführt, und diese liest für jedes ihr zugeführte körperliche Dokument selbsttätig die maschinell lesbaren Symbole mit Hilfe einer maschinellen Lesevorrichtung, ermittelt aus diesen die elektronische Kennung und ordnet das elektronische Dokument der entsprechenden Ware oder Gruppe von Waren körperlich zu.

Es kann von Vorteil sein, wenn die elektronischen Kennungen der elektronischen Dateien Teil der jeweiligen Dateinamen sind oder durch den Dateinamen gebildet werden. Dies ermöglicht eine besonders einfache Analyse der elektronischen Kennungen und eine besonders einfache Übertragung und Abspeicherung von diesen.

In einer vorteilhaften Ausgestaltung des Verfahrens werden in jedem Abgangssammellager die dort eintreffenden Waren bzw. Gruppen von Waren von einer dort angeordneten Datenverarbeitungseinrichtung registriert. In diesem Zusammenhang werden bevorzugt sie eindeutig kennzeichnende Informationen in der zentralen Datenbank - oder aber auch alternativ oder zusätzlich in einer dezentralen Datenbank in dem betreffenden Abgangssammellager - abgespeichert, bevorzugt mit weiteren Informationen, wie zum Beispiel mit dem Zeitpunkt ihres Eintreffens, ihrem Absender, dem Empfänger, dem entsprechenden Eingangssammellager, dem Zeitpunkt des Weitertransports an das Eingangssammellager, dem für sie vorgesehenen Transportweg (Direkttransport über Abgangssammellager oder Eingangssammellager oder Transport über Abgangs- und Eingangssammellager) und/oder der Art, Anzahl oder Menge der Waren. Zwischen mindestens einer der zentralen Datenverarbeitungseinrichtungen und der Datenverarbeitungseinrichtung in jedem Abgangssammellager wird bei Empfang einer elektronischen Datei, die sich auf das Abgangssammellager bezieht, und/oder zu vorbestimmten oder laufend neu bestimmten Zeitabständen über ein Datenübertragungsnetz, das bevorzugt identisch mit dem oben erwähnten Datenübertragungsnetz ist, automatisch ein Datenaustausch durchgeführt. Die ausgetauschten Daten sind dabei so gewählt, dass eine Datenverarbeitungseinrichtung auf ihrer Basis die Ware bzw. Gruppe von Waren identifizieren kann, der die jeweilige elektronische Datei zugeordnet ist. Der Datenaustausch kann ähnlich zu den oben beschriebenen Fällen erfolgen, indem die zentrale Datenverarbeitungseinrichtung entsprechende Daten an die Datenverarbeitungseinrichtung im Abgangssammellager sendet, die zentrale Datenverarbeitungseinrichtung entsprechende Daten in der zentralen Datenbank speichert und die Datenverarbeitungseinrichtung im Abgangssammellager informiert, dass die Daten zum Abruf bereitstehen, oder die zentrale Datenverarbeitungseinrichtung entsprechende Daten in der zentralen Datenbank speichert und die Datenverarbeitungseinrichtung im Abgangssammellager selbsttätig prüft, ob entsprechende Daten zum Abruf bereitstehen.

Anschließend wird anhand der ausgetauschten Daten selbsttätig von der Datenverarbeitungseinrichtung in jedem Abgangssammellager für jede elektronische Datei, die sich auf das jeweilige Abgangssammellager bezieht, und/oder selbsttätig von einer der zentralen Datenverarbeitungseinrichtungen für jede elektronische Datei überprüft, ob die Ware oder Gruppe von Waren, die der jeweiligen elektronischen Datei zugeordnet ist, in dem jeweiligen Abgangssammellager eingetroffen ist. Sollte dies nicht der Fall sein, so wird von der jeweiligen Datenverarbeitungseinrichtung in dem Abgangssammellager und/oder der jeweiligen zentralen Datenverarbeitungseinrichtung eine Alarmmeldung ausgegeben. In dieser Ausführungsform, die in vorteilhafter Weise zuvor nicht mögliche und zudem automatisierbare Vollständigkeits- und Fehlerkontrolle für die Abgangssammellager bereitstellt, ist es bevorzugt, wenn die elektronischen Kennungen so ausgestaltet sind, dass anhand von ihnen computergestützt automatisch auch der Absender ermittelt werden kann und wird, der der jeweiligen elektronischen Datei entspricht.

In ähnlicher Weise kann auch alternativ oder zusätzlich in vorteilhafter Weise eine Vollständigkeits- und Fehlerkontrolle für die Eingangssammellager bereitgestellt werden. Dazu registriert analog zu der soeben beschriebenen Weise in jedem Eingangssammellager eine dort angeordnete Datenverarbeitungseinrichtung, die bevorzugt einen Teil der jeweiligen Transformationseinrichtung bildet oder mit dieser verbunden ist, die in dem jeweiligen Eingangssammellager eintreffenden Waren bzw. Gruppen von Waren. Anschließend wird beispielsweise in vorgegebenen oder laufend neu bestimmten Zeitabständen von jeder Datenverarbeitungseinrichtung in jedem Eingangssammellager für jede der erhaltenen elektronischen Dateien selbsttätig überprüft, ob die Ware oder Gruppe von Waren, die der jeweiligen elektronischen Datei zugeordnet ist, in dem jeweiligen Eingangssammellager eingetroffen ist, und von der jeweiligen Datenverarbeitungseinrichtung in dem Eingangssammellager und/oder der mindestens einen zentralen Datenverarbeitungseinrichtung eine Alarmmeldung ausgegeben, wenn dies nicht der Fall sein sollte.

In einer bevorzugten Ausführungsform werden alle elektronischen Dateien über ein Datenübertragungsnetz an einer der zentralen Datenverarbeitungseinrichtungen von den Absendern der jeweiligen Waren empfangen. Die Absender erzeugen dann selbst die elektronischen Dateien und senden diese an die zentrale Datenverarbeitungseinrichtung. Das Datenübertragungsnetz ist bevorzugt identisch mit den bereits erwähnten Datenübertragungsnetzen.

Es ist aber auch möglich, dass vorgesehen wird, dass zwar einige und bevorzugt der Großteil der elektronischen Dateien in dieser Weise über das Datenübertragungsnetz an der mindestens einen zentralen Datenverarbeitungseinrichtung von den Absendern der jeweiligen Waren empfangen werden, dass aber die restlichen elektronischen Dateien noch in Papierform von den Absendern übergeben bzw. zugesandt werden. Insoweit wird eine solche elektronische Datei erzeugt, indem ein Schriftstück oder ein körperlicher Datenträger, das bzw. der dem der elektronischen Datei entsprechenden körperlichen Dokument gleicht, von dem Absender der jeweiligen Ware oder Gruppe von Waren in dem Abgangssammellager, das dem Absender zugeordnet ist, in dem Eingangssammellager, das dem jeweiligen Empfänger zugeordnet ist, oder an einer separaten Einrichtung empfangen und von einer in dem jeweiligen Lager bzw. der jeweiligen Einrichtung angeordneten Transformationseinrichtung durch Einscannen oder Auslesen in die elektronische Datei transformiert. Anschlie-βend wird sie von der mindestens einen zentralen Datenverarbeitungseinrichtung durch Datenaustausch mit der betreffenden Transformationseinrichtung empfangen, wobei wieder die drei oben diskutierten Möglichkeiten des Datenaustauschs vorgesehen werden können, d.h. die direkte Zusendung, die Zusendung einer Nachricht bzw. die Zugänglichmachung über die zentrale Datenbank. Alternativ oder zusätzlich ist es bei Vorhandensein von Eingangs- und Abgangssammellagern möglich, dass die elektronische Datei von der im Abgangssammellager angeordneten Transformationseinrichtung durch Datenaustausch mit der in dem entsprechenden Eingangssammellager angeordneten Transformationseinrichtung durch diese empfangen wird.

Das beschriebene Verfahren ist von besonderem Vorteil, wenn die Waren Lebensmittel sind, von denen zumindest ein Teil in einer geschlossenen Kühlkette von den Absendern zu den Empfängern transportiert wird bzw. werden muss.

Wie bereits angedeutet worden ist, kann die elektronische Kennung jeweils unmittelbar den ihr entsprechenden Empfänger, Absender und/oder die ihr entsprechende Ware oder Gruppe von Waren enthalten, ggf. in verschlüsselter Form. Es ist aber auch möglich, dass die elektronische Kennung lediglich Informationen aufweist, die auf weitere Informationen in einer Datenbank - wie beispielsweise der erwähnten zentralen Datenbank, einer der erwähnten dezentralen Datenbanken oder einer anderen Datenbank - verweisen, die dann den Empfänger und/oder Absender enthalten oder aus denen sich der Empfänger und/oder Absender entnehmen lässt. Mit anderen Worten ist es dann einer der erwähnten Datenverarbeitungseinrichtungen möglich, mit Hilfe der Informationen in der elektronischen Kennung die weiteren Informationen in der Datenbank zu ermitteln und abzurufen und aus ihnen den der elektronischen Kennung entsprechenden Empfänger und/oder die ihr entsprechende Ware oder Gruppe von Waren zu ermitteln, und die betreffenden Datenverarbeitungseinrichtungen sind dann dazu angepasst. Durch die letztere Ausgestaltung kann verhindert werden, dass die Absender für denselben Empfänger verschiedene Bezeichnungen in die Kennungen aufnehmen und so die automatische Verarbeitung kompliziert wird. Beispielsweise kann die elektronische Kennung Informationen über den Absender und über einen Lieferschein kennzeichnende Nummer enthalten, und anhand der Lieferscheinnummer kann aus einer geeigneten Datenbank ein zugehöriger Speditionsauftrag ermittelt und aus diesem der Empfänger entnommen werden.

Bei der Durchführung des beschriebenen Verfahrens kann in vorteilhafter Weise ein Logistiksystem verwendet werden, das zumindest die mindestens eine zentrale Datenverarbeitungseinrichtung und die in jedem Eingangssammellager angeordnete Transformationseinrichtung und/oder die in jedem Abgangssammellager oder in einigen Abgangssammellagern angeordnete Transformationseinrichtung sowie ggf. die zentrale Datenbank aufweist. Diese Komponenten sind über ein Datenübertragungsnetz miteinander verbunden und sind angepasst, um, bevorzugt selbsttätig, die für sie jeweils beschriebenen Schritte durchzuführen. Sie sind oben bereits ausführlich beschrieben worden.

Ein solches Logistiksystem weist somit bevorzugt eine oder aber auch mehrere zentrale Datenverarbeitungseinrichtungen, die an ein Datenübertragungsnetz angeschlossen und dazu angepasst sind, um selbsttätig die den körperlichen Dokumenten entsprechenden elektronischen Dateien über das Datenübertragungsnetz zu empfangen und ggf. zusammen mit der jeweiligen elektronischen Kennung in einer zentralen Datenbank zu speichern, die in einer separaten Datenverarbeitungseinrichtung oder einer der zentralen Datenverarbeitungsvorrichtungen vorgesehen sein kann, und eine Transformationseinrichtung - soweit vorhanden - in jedem Eingangssammellager auf, die an das Datenübertragungsnetz angeschlossen ist und angepasst ist, um über das Datenübertragungsnetz diejenigen elektronischen Dateien zu erhalten, die Empfängern entsprechen, die dem jeweiligen Eingangssammellager zugeordnet sind, und die elektronischen Dateien selbsttätig durch Ausdrucken auf einem Drucker oder Speichern auf einem körperlichen Datenträger in die diesen entsprechenden körperlichen Dokumente zur körperlichen Zuordnung zu der entsprechenden Ware oder Gruppe von Waren zu transformieren und/oder eine Transformationseinrichtung - soweit vorhanden - in jedem Abgangssammellager, die an das Datenübertragungsnetz angeschlossen und angepasst ist, um über das Datenübertragungsnetz diejenigen elektronischen Dateien zu erhalten, die Absendern entsprechen, die dem jeweiligen Abgangssammellager zugeordnet sind, und Waren entsprechen, die von dem jeweiligen Abgangssammellager direkt zu dem jeweiligen Empfänger transportiert werden sollen, und die elektronischen Dateien selbsttätig durch Ausdrucken auf einem Drucker oder Speichern auf einem körperlichen Datenträger in die diesen entsprechenden körperlichen Dokumente zur körperlichen Zuordnung zu der entsprechenden Ware oder Gruppe von Waren zu transformieren.

Das Logistiksystem kann so ausgestaltet sein, dass die zentrale Datenverarbeitungseinrichtung bzw. die zentralen Datenverarbeitungseinrichtungen ferner angepasst ist bzw. sind, um für jede empfangene elektronische Datei oder für zumindest einen Teil dieser Dateien selbsttätig anhand der elektronischen Kennung der jeweiligen elektronischen Datei den dieser entsprechenden Empfänger und anhand des Empfängers - soweit vorhanden - das entsprechende Eingangssammellager zu ermitteln und die elektronische Datei mit der elektronischen Kennung über das Datenübertragungsnetz an die in diesem Eingangssammellager angeordnete Datenverarbeitungseinrichtung zu übertragen und/oder selbsttätig anhand der elektronischen Kennung der jeweiligen elektronischen Datei den dieser entsprechenden Absender und anhand des Absenders - soweit vorhanden - das entsprechende Abgangssammellager zu ermitteln und die elektronische Datei mit der elektronischen Kennung über das Datenübertragungsnetz an die in diesem angeordnete Transformationseinrichtung zu übertragen. Weist das Logistiksystem die erwähnte zentrale Datenbank auf und ist die mindestens eine zentrale Datenverarbeitungseinrichtung dazu angepasst, um selbsttätig die empfangenen elektronischen Dateien zusammen mit der jeweiligen elektronischen Kennung in der zentralen Datenbank zu speichern, kann die zentrale Datenverarbeitungseinrichtung bzw. können die zentralen Datenverarbeitungseinrichtungen ferner alternativ oder zusätzlich angepasst sein, um für jede empfangene elektronische Datei oder für zumindest einen Teil dieser Dateien selbsttätig anhand der elektronischen Kennung der elektronischen Datei den dieser entsprechenden Empfänger und anhand des Empfängers - soweit vorhanden - das entsprechende Eingangssammellager zu ermitteln und eine elektronische Nachricht mit der elektronischen Kennung über das Datenübertragungsnetz an die in diesem Eingangssammellager angeordnete Transformationseinrichtung zu übertragen, wobei in diesem Fall in jedem oder zumindest einem Teil der Eingangssammellager die dort angeordnete Transformationseinrichtung angepasst ist, um nach Empfang einer solchen Nachricht selbsttätig über das Datenübertragungsnetz die der elektronischen Kennung entsprechende elektronische Datei aus der Datenbank abzurufen, und/oder um für jede empfangene elektronische Datei oder für zumindest einen Teil dieser Dateien selbsttätig auf Basis der elektronischen Kennung der elektronischen Datei den dieser entsprechenden Absender und anhand des Absenders - soweit vorhanden - das diesem entsprechende Abgangssammellager zu ermitteln und eine elektronische Nachricht mit der elektronischen Kennung über ein Datenübertragungsnetz an die in diesem Abgangssammellager angeordnete Transformationseinrichtung zu übertragen, wobei in zumindest einem Teil der Abgangssammellager die dort angeordnete Transformationseinrichtung angepasst ist, um nach Empfang einer solchen Nachricht selbsttätig über das Datenübertragungsnetz die der elektronischen Kennung entsprechende elektronische Datei aus der Datenbank abzurufen. Alternativ oder zusätzlich zu den letzteren Fällen kann das Logistiksystem auch so ausgestaltet sein, dass die Transformationseinrichtung in jedem oder zumindest einem Teil der Eingangssammellager und/oder Abgangssammellager ferner angepasst ist, um selbsttätig zumindest in regelmäßigen Zeitabständen über ein Datenübertragungsnetz auf die Datenbank zuzugreifen und anhand der elektronischen Kennungen der dort gespeicherten elektronischen Dateien festzustellen, ob neu in der Datenbank gespeicherte elektronische Dateien Empfängern entsprechen, die dem Eingangssammellager zugeordnet sind, in dem sie angeordnet ist, bzw. Absendern entsprechen, die dem Abgangssammellager zugeordnet sind, in dem sie angeordnet ist, und die elektronischen Dateien, für die die Feststellung positiv ist, aus der Datenbank abzurufen.

In einer bevorzugten Ausführungsform, bei der mindestens ein Abgangssammellager und/oder mindestens ein Eingangssammellager vorgesehen ist, weist das Logistiksystem eine automatisierte Sortiervorrichtung in dem mindestens einen Abgangssammellager auf, die angepasst ist, um selbsttätig die in dem jeweiligen Abgangssammellager eintreffenden Waren nach dem Eingangssammellager zu sortieren, das dem Empfänger der jeweiligen Ware zugeordnet ist, oder nach den Empfängern zu sortieren und/oder eine automatisierte Sortiervorrichtung in dem mindestens einen Eingangssammellager auf, die angepasst ist, um selbsttätig die in dem jeweiligen Eingangssammellager eintreffenden Waren nach den Empfängern oder Gruppen von Empfängern zu sortieren. In dem zweiten Fall ist die Transformationseinrichtung in jedem Eingangssammellager ferner angepasst, um die Transformation der elektronischen Dateien in die körperlichen Dokumente in der Weise durchzuführen, dass diese maschinell lesbare Symbole aufweisen, die für die jeweilige elektronische Kennung charakteristisch sind. Die automatisierte Sortiervorrichtung in jedem Eingangssammellager weist dann eine maschinelle Lesevorrichtung auf und ist ferner angepasst, um die körperlichen Dokumente nach der Transformation entgegenzunehmen und selbsttätig für jedes dieser körperlichen Dokumente die maschinell lesbaren Symbole mit Hilfe der maschinellen Lesevorrichtung zu lesen, aus diesen die elektronische Kennung zu ermitteln und das elektronische Dokument der entsprechenden Ware oder Gruppe von Waren körperlich zuzuordnen.

Die Erfindung wird im Folgenden anhand eines Ausführungsbeispiels unter Bezugnahme auf die beigefügte Figur näher erläutert.

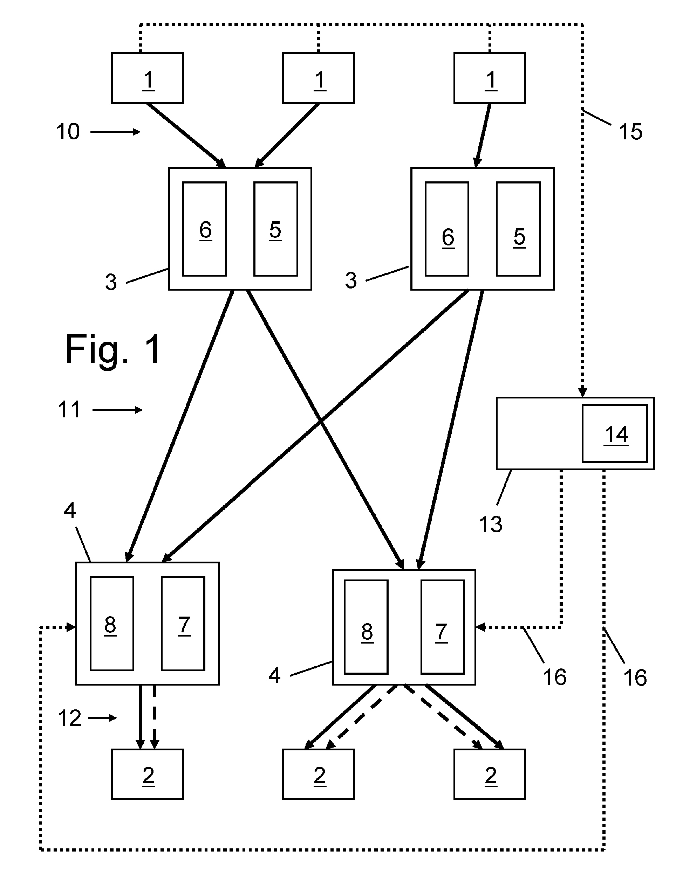

- Figur 1: ist eine schematische Übersicht über ein bevorzugtes Ausführungsbeispiel des erfindungsgemäßen Verfahrens und des erfindungsgemäßen Logistiksystems, bei dem sowohl Eingangssammellager als auch Abgangssammellager vorgesehen sind und der Transport der Waren dem typischen Fall folgt, dass sie vom Absender zu einem Abgangssammellager gebracht werden, dann in ein Eingangssammellager gelangen und von dort zum Empfänger transportiert werden.

Figur 1 zeigt eine Vielzahl von räumlich voneinander getrennten Absendern 1 von Waren und eine Vielzahl von räumlich voneinander getrennten Empfängern 2 der Waren, insbesondere von Lebensmitteln, die eine geschlossene Kühlkette durchlaufen müssen. Die Absender 1 und Empfänger 2 sind über eine im Folgenden beschriebene logistische Prozesskette miteinander verbunden, entlang derer die Waren transportiert werden.

Jedem der Absender 1 ist genau eines von mehreren regional verteilten Abgangssammellagern 3 zugeordnet, wobei jedes der Abgangssammellager 3 im Allgemeinen jeweils mehreren der Absender 1 gemeinsam ist, die sich in einer bestimmten räumlichen Nähe zu dem betreffenden Abgangssammellager 3 befinden. In den Abgangssammellagern 3 werden die von den Absendern 1 abgesendeten Waren gesammelt und für den Weitertransport zu den Empfängern 2 verarbeitet und vorbereitet.

In ähnlicher Weise ist jedem der Empfänger 2 genau eines von mehreren regional verteilten Eingangssammellagern 4 zugeordnet, wobei jedes der Eingangssammellager 4 im Allgemeinen jeweils mehreren der Empfänger 2 gemeinsam ist, die sich in einer bestimmten räumlichen Nähe zu dem betreffenden Eingangssammellager 4 befinden. In den Eingangssammellagern 4 werden die an die Empfänger 2 zu transportierenden Waren gesammelt und für den Weitertransport zu den Empfängern 2 verarbeitet und vorbereitet.

Der Transport der Waren von den Absendern 1 zu den Abgangssammellagern 3 erfolgt mit Hilfe geeigneter Transportfahrzeuge des Logistikunternehmens, mit denen die Waren nach Anforderung bei den Absendern 1 abgeholt werden, entlang der jeweiligen Transportstrecken 10. Die Transportstrecken 10 sind oder umfassen bevorzugt Straßen- und/oder Schienenstrecken, können aber auch Wasser- und/oder Luftstrecken sein oder umfassen.

Jedes der Abgangssammellager 3 kann optional eine automatisierte Sortiervorrichtung 5 und eine Datenverarbeitungseinrichtung z.B. in Form eines Computers 6 aufweisen. Die in dem jeweiligen Abgangssammellager 3 eintreffenden Waren werden dann durch den Computer 6 registriert und mit Hilfe der Sortiervorrichtung 5 danach sortiert, zu welchem der Eingangssammellager 4 sie transportiert werden müssen. Das Sortierkriterium umfasst an diesem Punkt der logistischen Prozesskette somit das dem jeweiligen Empfänger 2 zugeordnete Eingangssammellager 4. Die Registrierung der Waren durch den Computer 6 findet bevorzugt automatisch oder halbautomatisch mittels einer mit dem Computer 6 verbundenen Lesevorrichtung statt, die ein an den Waren angebrachtes symbolisches oder elektronisches Identifizierungsmerkmal erkennen und interpretieren kann, um zumindest die Waren und den Empfänger und bevorzugt auch den Absender und weitere warenbezogene Daten zu erfassen. Das Identifizierungsmerkmal kann beispielsweise einen Barcode oder ein RFID-Etikett umfassen. Alternativ kann auch eine manuelle oder halbautomatische Sortierung vorgesehen sein.

Die sortierten Waren werden dann in Abhängigkeit von dem Bestimmungs-Eingangssammellager 4 auf verschiedene Transportfahrzeuge verladen und entlang der Transportstrecken 11 zu den betreffenden Eingangssammellagern 4 transportiert. Die Transportstrecken 11 können neben Straßen- und/oder Schienenstrecken auch Wasser- und/oder Luftstrecken umfassen.

Jedes der Eingangssammellager 4 weist eine einen Computer bzw. eine Datenverarbeitungseinrichtung umfassende Transformationseinrichtung 8 auf und kann ferner ebenfalls eine automatisierte Sortiervorrichtung 7 aufweisen. Die in dem jeweiligen Eingangssammellager 4 eintreffenden Waren können durch den Computer der Transformationseinrichtung 8 registriert und mit Hilfe der Sortiervorrichtung 7 danach sortiert werden, zu welchem der Empfänger 2 sie transportiert werden müssen. Das Sortierkriterium umfasst an diesem Punkt der logistischen Prozesskette somit den jeweiligen Empfänger 2 oder aber eine Gruppe von Empfängern 2, die räumlich so dicht zueinander gelegen sind, dass sie zweckmäßig mit Hilfe desselben Transportfahrzeug auf einer gemeinsamen Tour angefahren werden können. Die optionale Registrierung der Waren durch den Computer 8 kann wieder automatisch oder halbautomatisch mittels einer mit dem Computer 8 verbundenen Lesevorrichtung stattfinden, die das an den Waren angebrachte Identifizierungsmerkmal erfasst. Es ist aber auch möglich, dass der Computer 8 lediglich die Ankunft der einzelnen Transportfahrzeuge erfasst, deren jeweilige Warenladung ja bereits von den Computern 6 in den Abgangssammellagern 3 erfasst worden ist. Die von den Computern 6 erfassten warenbezogenen Daten werden zu diesem Zweck bevorzugt über ein Datenübertragungsnetz den Computern 8 zugänglich gemacht, zum Beispiel durch Speicherung in der Datenbank 14 des noch zu beschreibenden Zentralcomputers 13. Alternativ kann auch wieder lediglich eine manuelle oder halbautomatische Sortierung vorgesehen sein.

Anschließend werden die sortierten Waren in Abhängigkeit von den Empfängern 2 oder Gruppen von Empfängern 2 auf verschiedene Transportfahrzeuge verladen und entlang der Transportstrecken 12 zu den betreffenden Empfängern 2 transportiert. Die Transportstrecken 12 sind oder umfassen bevorzugt Straßenund/oder Schienenstrecken, können aber auch Wasser- und/oder Luftstrecken sein oder umfassen.

Zeitlich unabhängig von der Abholung der Waren bei den Absendern 1 versenden diese in elektronischer Form warenbezogene Dokumente über das Datenübertragungsnetz 15 an eine entfernt von den Abgangssammellagern 3 und den Eingangssammellagern 4 angeordnete zentrale Datenverarbeitungseinrichtung 13, die bevorzugt durch einen Zentralcomputer gebildet wird und bevorzugt als Server ausgestaltet ist, während die Computer 6 und/oder 8 bevorzugt als Clients ausgebildet sind. Diese warenbezogenen Dokumente, die zum Beispiel Lieferscheine sein können, sind jeweils den Waren so zugeordnet, dass jede Ware genau einem der Dokumente zugeordnet ist und sich jedes Dokument auf Waren eines bestimmten Empfängers bezieht. Mit anderen Worten entspricht jedes der Dokumente genau einer Ware oder aber einer Gruppe von mehreren Waren. Die elektronische Form der Dokumente sind jeweilige elektronische Dateien, die in einer bevorzugten Ausgestaltung zum Beispiel elektronische Versionen der Dokumente im PDF-Format sind.

Jede derartige elektronische Datei weist eine elektronische Kennung auf, die durch ihren Dateinamen gebildet wird und daher von dem Zentralcomputer 13 leicht ausgewertet werden kann. In dem Dateinamen sind nach einer Vorbestimmten Kodierungsvorschrift Informationen enthalten, die zumindest die zugeordneten Waren und den Empfänger der Waren eindeutig identifizieren. Die Kodierungsvorschrift kann dabei die Verwendung weiterer Informationen umfassen, die in einer Datenbank gespeichert sind, wie etwa der nachfolgend erläuterten zentralen Datenbank 14.

Nach Empfang der elektronischen Dateien an dem Zentralcomputer 13 werden diese in einer Datenbank 14 gespeichert, auf die bevorzugt die Computer 6 und/oder 8 über ein nicht gezeigtes Datenübertragungsnetz zugreifen können, das mit dem Datenübertragungsnetz 15 identisch sein kann. Der Zentralcomputer 13 wertet die elektronische Kennung aus, um automatisch den richtigen Empfänger 2 und auf Grundlage des Empfängers 2 anhand der vorbestimmten, zum Beispiel in der Datenbank 14 abgespeicherten Zuordnung zwischen Empfängern 2 und Eingangssammellagern 4 das Eingangssammellager 4 zu ermitteln, in die die jeweiligen Waren transportiert worden sind oder werden. Anschließend sendet der Zentralcomputer 13 die elektronische Datei über ein Datenübertragungsnetz 16, das bevorzugt mit dem Datenübertragungsnetz 15 identisch ist, an den Computer 8 in dem ermittelten Eingangssammellager 4. Dabei kann die Übersendung unmittelbar nach Empfang jeder elektronischen Datei erfolgen, oder es werden zunächst mehrere elektronische Dateien über einen gewissen Zeitraum gesammelt und gemeinsam versendet.

Nach Empfang der elektronischen Dateien durch die Computer 8 in den Eingangssammellagern 4 werden sie bevorzugt mit Hilfe eines mit dem jeweiligen Computer 8 verbundenen Druckers automatisch ausgedruckt, um das der elektronischen Datei entsprechende körperliche Dokument zu erhalten. Die körperlichen Dokumente werden dann der jeweiligen Sortiervorrichtung 7 zugeführt, die es der entsprechenden Ware oder Gruppe von Waren körperlich zuordnet. Zu diesem Zweck ist die Sortiervorrichtung 7 auch dazu angepasst, um als weiteres Sortierkriterium für die Waren die elektronischen Dateien bzw. körperlichen Dokumente zu verwenden, um die durch die elektronischen Dateien bezeichneten Waren bzw. Gruppen von Waren zu separieren.

Der Transport der Waren über die Transportstrecken 12 zu den Empfängern 2 erfolgt zusammen mit den jeweiligen körperlichen Dokumenten, und die einzelnen Waren bzw. Gruppen von Waren werden den Empfängern 2 zusammen mit den zugeordneten körperlichen Dokumenten übergeben.

## Patentansprüche

1. Verfahren zur Beförderung einer Vielzahl von Waren entlang einer logistischen Prozesskette von Absendern (1) zu jeweiligen Empfängern (2), wobei die logistische Prozesskette mindestens ein Abgangssammellager (3) und/oder mindestens ein Eingangssammellager (4) umfasst und jedem Abgangssammellager (3) mindestens einer der Absender (1) zugeordnet ist und jedem Eingangssammellager (4) mindestens einer der Empfänger (2) zugeordnet ist, wobei bei Vorhandensein mindestens eines Abgangssammellagers (3) und mindestens eines Eingangssammellagers (4) jedes Paar von Abgangs- und Eingangssammellager (3, 4) räumlich voneinander entfernt angeordnet sein oder durch ein gemeinsames Lager gebildet werden kann und wobei bei dem Verfahren:
- Waren jedes Absenders (1) mit Hilfe mindestens eines Transportfahrzeugs zu einem der Abgangssammellager (3), das dem jeweiligen Absender (1) zugeordnet ist, oder direkt zu einem der Eingangssammellager (4) transportiert werden, das dem Empfänger (2) der jeweiligen Waren zugeordnet ist,
- in jedem Abgangssammellager (3) jede eintreffende Ware ausgeladen und dort
- nach dem Empfänger (2) sortiert und mit Hilfe mindestens eines Transportfahrzeugs direkt zu dem jeweiligen Empfänger (2) transportiert wird oder
- nach einem der Eingangssammellager (4) sortiert wird, das dem Empfänger (2) der jeweiligen Ware zugeordnet ist, wobei für jedes Eingangssammellager (4), dem eine oder mehrere Waren zusortiert wurden, die diesem entsprechenden Waren mit Hilfe mindestens eines Transportfahrzeugs zu dem jeweiligen Eingangssammellager (4) transportiert werden, sofern das jeweilige Eingangssammellager (4) nicht mit dem jeweiligen Abgangssammellager (3) durch ein gemeinsames Lager gebildet wird, und
- in jedem Eingangssammellager (4) die eintreffenden Waren ausgeladen und die ausgeladenen oder dort befindlichen Waren nach den Empfängern (2) oder nach Gruppen von Empfängern (2) sortiert und mit Hilfe mindestens eines Transportfahrzeugs zu den jeweiligen Empfängern (2) transportiert werden,
- wobei bei der Sortierung in dem mindestens einen Eingangssammellager (4) und, in dem Fall von Waren, die von einem der Abgangssammellager (3) direkt zu dem jeweiligen Empfänger (2) transportiert werden sollen, bei der Sortierung nach dem Empfänger (2) in dem mindestens einen Abgangssammellager (3) jeder Ware mindestens eines einer Vielzahl körperlicher Dokumente körperlich zugeordnet wird, von denen sich jedes auf eine Ware oder eine Gruppe von Waren bezieht, die von einem bestimmten Absender (1) an einen bestimmten Empfänger (2) gesendet werden, und einen durch den entsprechenden Absender (1) bestimmten Inhalt hat, die körperlichen Dokumente zusammen mit der jeweils zugeordneten Ware oder Gruppe von Waren zu den Empfängern (2) transportiert werden und jedem Empfänger (2) die bei ihm eintreffenden Waren so übergeben werden, dass ihm mindestens eines der entsprechenden körperlichen Dokumente zusammen mit der jeweils zugeordneten Ware oder Gruppe von Waren übergeben wird,
**dadurch gekennzeichnet, dass** bei dem Verfahren ferner:
- jeweils einem der körperlichen Dokumenten entsprechende elektronische Dateien über ein Datenübertragungsnetz (15) an mindestens einer von einer oder mehreren zentralen Datenverarbeitungseinrichtungen (13) empfangen werden, wobei jede elektronische Datei eine elektronische Kennung aufweist, auf deren Basis mit Hilfe einer Datenverarbeitungseinrichtung automatisch der der elektronischen Datei entsprechende Absender (1) und Empfänger (2) und die dieser entsprechende Ware oder Gruppe von Waren ermittelt werden kann,
- in jedem Eingangssammellager (4) eine dort angeordnete Transformationseinrichtung (8) mittels elektronischer Datenübertragung diejenigen elektronischen Dateien erhält, die Empfängern (2) entsprechen, die dem jeweiligen Eingangssammellager (4) zugeordnet sind, und einem körperlichen Dokument entsprechen, das sich auf eine Ware oder Gruppe von Waren bezieht, die in dem jeweiligen Eingangssammellager (4) eintrifft oder befindet, und die elektronischen Dateien in die diesen entsprechenden körperlichen Dokumente zur körperlichen Zuordnung zu der entsprechenden Ware oder Gruppe von Waren transformiert, indem die elektronischen Dateien von der Transformationseinrichtung (8) auf einem Drucker ausgedruckt oder auf einem körperlichen Datenträger gespeichert werden, und
- in jedem Abgangssammellager (3) für den Fall von Waren, die von dem jeweiligen Abgangssammellager direkt zu dem jeweiligen Empfänger (2) transportiert werden sollen, eine dort angeordnete Transformationseinrichtung (8) mittels elektronischer Datenübertragung diejenigen elektronischen Dateien erhält, die einem körperlichen Dokument entsprechen, das sich auf eine dieser Waren oder eine Gruppe dieser Waren bezieht, und die elektronischen Dateien in die diesen entsprechenden körperlichen Dokumente zur körperlichen Zuordnung zu der entsprechenden Ware oder Gruppe von Waren transformiert, indem die elektronischen Dateien von der Transformationseinrichtung (8) auf einem Drucker ausgedruckt oder auf einem körperlichen Datenträger gespeichert werden.

2. Verfahren nach Anspruch 1, bei dem die logistische Prozesskette mindestens ein Abgangssammellager (3) und mindestens ein Eingangssammellager (4) umfasst, wobei mindestens ein Abgangssammellager (3) räumlich von mindestens einem Eingangssammellager (4) entfernt ist und jeder der Absender (1) einem der Abgangssammellager (3) zugeordnet ist und jeder der Empfänger (2) einem der Eingangssammellager (4) zugeordnet ist, wobei
- Waren jedes Absenders (1) mit Hilfe mindestens eines Transportfahrzeugs zum dem jeweiligen Absender zugeordneten Abgangssammellager (3) transportiert werden,
- die in dem mindestens einen Abgangssammellager (3) eintreffende Waren ausgeladen und dort nach dem Eingangssammellager (4) sortiert werden, das dem Empfänger (2) der jeweiligen Ware zugeordnet ist, und für jedes Eingangssammellager (4) die diesem entsprechenden Waren mit Hilfe mindestens eines Transportfahrzeugs zu dem jeweiligen Eingangssammellager transportiert werden, sofern das jeweilige Eingangssammellager (4) nicht mit dem jeweiligen Abgangssammellager (3) durch ein gemeinsames Lager gebildet wird, und
- die in dem mindestens einen Eingangssammellager (4) eintreffenden Waren ausgeladen und dort nach den Empfängern (2) oder Gruppen von Empfängern sortiert und mit Hilfe mindestens eines Transportfahrzeugs zu den jeweiligen Empfängern (2) transportiert werden,
- wobei die Zuordnung jeder Ware zu einem der körperlichen Dokumente bei der Sortierung in dem mindestens einen Eingangssammellager (4) durchgeführt wird und
- wobei in jedem Eingangssammellager (4) eine dort angeordnete Transformationseinrichtung (8) mittels elektronischer Datenübertragung diejenigen elektronischen Dateien erhält, die Empfängern (2) entsprechen, die dem jeweiligen Eingangssammellager (4) zugeordnet sind, und die elektronischen Dateien in die diesen entsprechenden körperlichen Dokumente zur körperlichen Zuordnung zu der entsprechenden Ware oder Gruppe von Waren transformiert, indem die elektronischen Dateien von der Transformationseinrichtung (8) auf einem Drucker ausgedruckt oder auf einem körperlichen Datenträger gespeichert werden.

3. Verfahren nach Anspruch 1 oder Anspruch 2, bei dem ferner die zentrale Datenverarbeitungseinrichtung (13) bzw. zentralen Datenverarbeitungseinrichtungen (13) die empfangenen elektronischen Dateien selbsttätig zusammen mit den elektronischen Kennungen in einer zentralen Datenbank (14) speichert bzw. speichern.

4. Verfahren nach einem der vorhergehenden Ansprüche, bei dem der Schritt, in dem eine in einem Eingangssammellager (4) angeordnete Transformationseinrichtung (8) elektronische Dateien erhält, die Empfängern (2) entsprechen, die dem jeweiligen Eingangssammellager zugeordnet sind, die Schritte aufweist, dass für zumindest einen Teil der elektronischen Dateien für jede der entsprechenden elektronischen Dateien, die an mindestens einer der zentralen Datenverarbeitungseinrichtungen (13) empfangen wird,
- eine der zentralen Datenverarbeitungseinrichtungen (13) selbsttätig auf Basis der elektronischen Kennung der elektronischen Datei den dieser entsprechenden Empfänger (2) und anhand des Empfängers das diesem zugeordnete Eingangssammellager (4) ermittelt und die elektronische Datei mit der elektronischen Kennung über ein Datenübertragungsnetz (16) an die in diesem Eingangssammellager (4) angeordnete Transformationseinrichtung (8) überträgt oder
- eine der zentralen Datenverarbeitungseinrichtungen (13) selbsttätig die elektronischen Dateien über ein Datenübertragungsnetz an eine jeweilige Datenverarbeitungseinrichtung (6) in dem Abgangssammellager (3) überträgt, das dem der jeweiligen elektronischen Datei zugeordneten Absender (1) entspricht, und die Datenverarbeitungseinrichtungen (6) in den Abgangssammellagern (3) selbsttätig auf Basis der elektronischen Kennung jeder empfangenen elektronischen Datei den dieser entsprechenden Empfänger (2) und anhand des Empfängers das diesem zugeordnete Eingangssammellager (4) ermittelt und die jeweilige elektronische Datei mit der elektronischen Kennung über ein Datenübertragungsnetz an die in diesem Eingangssammellager angeordnete Transformationseinrichtung überträgt,
und/oder bei dem der Schritt, in dem eine in einem Abgangssammellager angeordnete Transformationseinrichtung elektronische Dateien erhält, die Waren entsprechen, die von dem jeweiligen Abgangssammellager direkt zu dem jeweiligen Empfänger transportiert werden sollen, die Schritte aufweist, dass für zumindest einen Teil der elektronischen Dateien für jede der entsprechenden elektronischen Dateien, die an mindestens einer der zentralen Datenverarbeitungseinrichtungen empfangen wird, eine der zentralen Datenverarbeitungseinrichtungen selbsttätig die elektronischen Dateien über ein Datenübertragungsnetz an die jeweilige Transformationseinrichtung in dem Abgangssammellager überträgt, das dem der jeweiligen elektronischen Datei zugeordneten Absender entspricht.

5. Verfahren nach Anspruch 3 oder den Ansprüchen 3 und 4, bei dem der Schritt, in dem eine in einem Eingangssammellager (4) angeordnete Transformationseinrichtung (8) elektronische Dateien erhält, die Empfängern (2) entsprechen, die dem jeweiligen Eingangssammellager (4) zugeordnet sind, die Schritte aufweist, dass
- für zumindest einen Teil der elektronischen Dateien für jede der entsprechenden elektronischen Dateien, die an mindestens einer der zentralen Datenverarbeitungseinrichtungen (13) empfangen wird, eine der zentralen Datenverarbeitungseinrichtungen selbsttätig auf Basis der elektronischen Kennung der elektronischen Datei den dieser entsprechenden Empfänger (2) und anhand des Empfängers das diesem zugeordnete Eingangssammellager (4) ermittelt und eine elektronische Nachricht mit der elektronischen Kennung über ein Datenübertragungsnetz (16) an die in diesem Eingangssammellager (4) angeordnete Transformationseinrichtung (8) überträgt und
- in jedem Eingangssammellager (4) die dort angeordnete Transformationseinrichtung (8) nach Empfang einer solchen Nachricht selbsttätig über ein Datenübertragungsnetz (16) die der elektronischen Kennung entsprechende elektronische Datei aus der Datenbank (14) abruft
und/oder bei dem der Schritt, in dem eine in einem Abgangssammellager angeordnete Transformationseinrichtung elektronische Dateien erhält, die Waren entsprechen, die von dem jeweiligen Abgangssammellager direkt zu dem jeweiligen Empfänger transportiert werden sollen, die Schritte aufweist, dass
- für zumindest einen Teil der elektronischen Dateien für jede der entsprechenden elektronischen Dateien, die an mindestens einer der zentralen Datenverarbeitungseinrichtungen empfangen wird, eine der zentralen Datenverarbeitungseinrichtungen selbsttätig auf Basis der elektronischen Kennung der elektronischen Datei den dieser entsprechenden Absender und anhand des Absenders das diesem zugeordnete Abgangssammellager ermittelt und eine elektronische Nachricht mit der elektronischen Kennung über ein Datenübertragungsnetz an die in diesem Abgangssammellager angeordnete Transformationseinrichtung überträgt und
- in jedem Abgangssammellager die dort angeordnete Transformationseinrichtung nach Empfang einer solchen Nachricht selbsttätig über ein Datenübertragungsnetz die der elektronischen Kennung entsprechende elektronische Datei aus der Datenbank abruft.

6. Verfahren nach Anspruch 3, den Ansprüchen 3 und 4 oder Anspruch 5, bei dem der Schritt, in dem eine in einem Eingangssammellager (4) angeordnete Transformationseinrichtung (8) elektronischen Dateien erhält, die Empfängern (2) entsprechen, die dem jeweiligen Eingangssammellager (4) zugeordnet sind, die Schritte aufweist, dass in zumindest einem Teil der Eingangssammellager (4) die dort angeordnete Transformationseinrichtung (8) selbsttätig zumindest in regelmäßigen Zeitabständen über ein Datenübertragungsnetz (16) auf die Datenbank (14) zugreift und anhand der elektronischen Kennungen der dort gespeicherten elektronischen Dateien feststellt, ob neu in der Datenbank (14) gespeicherte elektronische Dateien Empfängern (2) entsprechen, die dem Eingangssammellager (4) zugeordnet sind, in dem sie angeordnet ist, und die elektronischen Dateien, für die die Feststellung positiv ist, aus der Datenbank (14) abruft, und/oder
bei dem der Schritt, in dem eine in einem Abgangssammellager angeordnete Transformationseinrichtung elektronische Dateien erhält, die Waren entsprechen, die von dem jeweiligen Abgangssammellager direkt zu dem jeweiligen Empfänger transportiert werden sollen, die Schritte aufweist, dass in zumindest einem Teil der Abgangssammellager die dort angeordnete Transformationseinrichtung selbsttätig zumindest in regelmäßigen Zeitabständen über ein Datenübertragungsnetz auf die Datenbank zugreift und anhand der elektronischen Kennungen der dort gespeicherten elektronischen Dateien feststellt, ob neu in der Datenbank gespeicherte elektronische Dateien sich auf Waren beziehen, die aus dem betreffenden Abgangssammellager direkt zu Empfängern transportiert werden sollen, und die elektronischen Dateien, für die die Feststellung positiv ist, aus der Datenbank abruft.

7. Verfahren nach einem der vorhergehenden Ansprüche, bei dem nur eine zentrale Datenverarbeitungseinrichtung (13) vorgesehen ist.

8. Verfahren nach einem der vorhergehenden Ansprüche, bei dem die elektronischen Kennungen der elektronischen Dateien Teil der jeweiligen Dateinamen sind.

9. Verfahren nach einem der vorhergehenden Ansprüche, bei dem ferner
- in jedem Abgangssammellager (3) eine dort angeordnete Datenverarbeitungseinrichtung (6) die in dem jeweiligen Abgangssammellager (3) eintreffenden Waren und/oder Gruppen von Waren registriert,
- zwischen der mindestens einen zentralen Datenverarbeitungseinrichtung (13) und der Datenverarbeitungseinrichtung (6) in jedem Abgangssammellager (3) bei Empfang einer elektronischen Datei, die sich auf das Abgangssammellager bezieht, und/oder zu vorbestimmten Zeitabständen über ein Datenübertragungsnetz automatisch ein Datenaustausch durchgeführt wird,
- anhand der ausgetauschten Daten selbsttätig von der Datenverarbeitungseinrichtung (6) in jedem Abgangssammellager (3) für jede elektronische Datei, die sich auf das jeweilige Abgangssammellager bezieht, und/oder selbsttätig von der mindestens einen zentralen Datenverarbeitungseinrichtung (13) für jede elektronische Datei überprüft wird, ob die Ware oder Gruppe von Waren, die der jeweiligen elektronischen Datei zugeordnet ist, in dem jeweiligen Abgangssammellager (3) eingetroffen ist, und
- von der jeweiligen Datenverarbeitungseinrichtung (6) in dem Abgangssammellager (3) und/oder der mindestens einen zentralen Datenverarbeitungseinrichtung (13) eine Alarmmeldung ausgegeben wird, wenn die Überprüfung mangelnde Vollständigkeit feststellt.

10. Verfahren nach einem der vorhergehenden Ansprüche, bei dem ferner
- in jedem Eingangssammellager (4) die dort angeordnete Transformationseinrichtung (8) eine Datenverarbeitungseinrichtung aufweist und die in dem jeweiligen Eingangssammellager eintreffenden Waren und/oder Gruppen von Waren registriert,
- von der Transformationseinrichtung (8) in jedem Eingangssammellager (4) für jede der erhaltenen elektronischen Dateien selbsttätig überprüft wird und/oder nach einem automatischen Datenaustausch über ein Datenübertragungsnetz (16) von der mindestens einen zentralen Datenverarbeitungseinrichtung (13) selbsttätig überprüft wird, ob die Ware oder Gruppe von Waren, die der jeweiligen elektronischen Datei zugeordnet ist, in dem jeweiligen Eingangssammellager (4) eingetroffen ist, und
- von der jeweiligen Transformationseinrichtung (8) in dem Eingangssammellager (4) und/oder der mindestens einen zentralen Datenverarbeitungseinrichtung (13) eine Alarmmeldung ausgegeben wird, wenn die Überprüfung mangelnde Vollständigkeit feststellt.

11. Verfahren nach einem der vorhergehenden Ansprüche, bei dem
- alle elektronischen Dateien über ein Datenübertragungsnetz (15) an der mindestens einen zentralen Datenverarbeitungseinrichtung (13) von den Absendern (1) der jeweiligen Waren empfangen werden oder
- einige der elektronischen Dateien über ein Datenübertragungsnetz (15) an der mindestens einen zentralen Datenverarbeitungseinrichtung (13) von den Absendern (1) der jeweiligen Waren empfangen werden und jede der restlichen elektronischen Dateien
- erzeugt wird, indem ein Schriftstück, das dem der elektronischen Datei entsprechenden körperlichen Dokument gleicht, von dem Absender (1) der jeweiligen Ware oder Gruppe von Waren in dem Abgangssammellager (3), das dem Absender (1) zugeordnet ist, empfangen und von einer in dem Abgangssammellager (3) angeordneten Transformationseinrichtung durch Einscannen in die elektronische Datei transformiert wird, und
- von der mindestens einen zentralen Datenverarbeitungseinrichtung (13) durch Datenaustausch mit der in dem Abgangssammellager (3) angeordneten Transformationseinrichtung empfangen wird.

12. Verfahren nach einem der vorhergehenden Ansprüche, bei dem
- die elektronische Kennung unmittelbar den ihr entsprechenden Empfänger und/oder die ihr entsprechende Ware oder Gruppe von Waren enthält und/oder
- die elektronische Kennung Informationen aufweist, die auf weitere Informationen in einer Datenbank verweist, so dass eine Datenverarbeitungseinrichtung mit Hilfe der Informationen in der elektronischen Kennung die weiteren Informationen in der Datenbank ermitteln und abrufen und aus ihnen den der elektronischen Kennung entsprechenden Empfänger und/oder die ihr entsprechende Ware oder Gruppe von Waren ermitteln kann.

13. Logistiksystem zur Verwendung in einem Verfahren nach einem der vorhergehenden Ansprüche, wobei das Logistiksystem aufweist:
- mindestens eine zentrale Datenverarbeitungseinrichtung (13), die an ein Datenübertragungsnetz (15, 16) angeschlossen ist und dazu angepasst ist, um selbsttätig die den körperlichen Dokumenten entsprechenden elektronischen Dateien über das Datenübertragungsnetz (15) zu empfangen, und
- eine Transformationseinrichtung (8) in jedem Eingangssammellager (4), die an das Datenübertragungsnetz (16) angeschlossen und angepasst ist, um über das Datenübertragungsnetz (16) diejenigen elektronischen Dateien zu erhalten, die Empfängern (2) entsprechen, die dem jeweiligen Eingangssammellager (4) zugeordnet sind, und die elektronischen Dateien selbsttätig durch Ausdrucken auf einem Drucker oder Speichern auf einem körperlichen Datenträger in die diesen entsprechenden körperlichen Dokumente zur körperlichen Zuordnung zu der entsprechenden Ware oder Gruppe von Waren zu transformieren und/oder eine Transformationseinrichtung in jedem Abgangssammellager (3), die an das Datenübertragungsnetz angeschlossen und angepasst ist, um über das Datenübertragungsnetz diejenigen elektronischen Dateien zu erhalten, die Absendern (1) entsprechen, die dem jeweiligen Abgangssammellager (3) zugeordnet sind, und Waren entsprechen, die von dem jeweiligen Abgangssammellager (3) direkt zu dem jeweiligen Empfänger (2) transportiert werden sollen, und die elektronischen Dateien selbsttätig durch Ausdrucken auf einem Drucker oder Speichern auf einem körperlichen Datenträger in die diesen entsprechenden körperlichen Dokumente zur körperlichen Zuordnung zu der entsprechenden Ware oder Gruppe von Waren zu transformieren.

14. Logistiksystem nach Anspruch 13, bei dem
- die mindestens eine zentrale Datenverarbeitungseinheit (13) ferner angepasst ist, um
- für jede von zumindest einem Teil der empfangenen elektronischen Dateien selbsttätig anhand der elektronischen Kennung der jeweiligen elektronischen Datei den dieser entsprechenden Empfänger (2) und anhand des Empfängers (2) das entsprechende Eingangssammellager (4) zu ermitteln und die elektronische Datei mit der elektronischen Kennung über das Datenübertragungsnetz (16) an die in diesem Eingangssammellager (4) angeordnete Transformationseinrichtung (8) zu übertragen und/oder
- für jede von zumindest einem Teil der empfangenen elektronischen Dateien selbsttätig anhand der elektronischen Kennung der jeweiligen elektronischen Datei den dieser entsprechenden Absender (1) und anhand des Absenders (1) das entsprechende Abgangssammellager (3) zu ermitteln und die elektronische Datei mit der elektronischen Kennung über das Datenübertragungsnetz an die in diesem angeordnete Transformationseinrichtung zu übertragen und/oder
- das Logistiksystem ferner eine zentrale Datenbank (14) aufweist und die mindestens eine zentrale Datenverarbeitungseinrichtung (13) dazu angepasst ist, um selbsttätig die empfangenen elektronischen Dateien zusammen mit der jeweiligen elektronischen Kennung in der zentralen Datenbank (14) zu speichern,
- wobei die mindestens eine zentrale Datenverarbeitungseinheit (13) ferner angepasst ist,
- um für jede von zumindest einem Teil der empfangenen elektronischen Dateien selbsttätig anhand der elektronischen Kennung der elektronischen Datei den dieser entsprechenden Empfänger (2) und anhand des Empfängers (2) das entsprechende Eingangssammellager (4) zu ermitteln und eine elektronische Nachricht mit der elektronischen Kennung über das Datenübertragungsnetz (16) an die in diesem Eingangssammellager (4) angeordnete Transformationseinrichtung (8) zu übertragen, wobei in zumindest einem Teil der Eingangssammellager (4) die dort angeordnete Transformationseinrichtung (8) angepasst ist, um nach Empfang einer solchen Nachricht selbsttätig über das Datenübertragungsnetz (16) die der elektronischen Kennung entsprechende elektronische Datei aus der Datenbank (14) abzurufen, und/oder
- um für jede von zumindest einem Teil der empfangenen elektronischen Dateien selbsttätig auf Basis der elektronischen Kennung der elektronischen Datei den dieser entsprechenden Absender (1) und anhand des Absenders (1) das diesem entsprechende Abgangssammellager (3) zu ermitteln und eine elektronische Nachricht mit der elektronischen Kennung über ein Datenübertragungsnetz an die in diesem Abgangssammellager (3) angeordnete Transformationseinrichtung (8) zu übertragen, wobei in zumindest einem Teil der Abgangssammellager (3) die dort angeordnete Transformationseinrichtung angepasst ist, um nach Empfang einer solchen Nachricht selbsttätig über das Datenübertragungsnetz die der elektronischen Kennung entsprechende elektronische Datei aus der Datenbank (14) abzurufen, und/oder
- wobei die Transformationseinrichtung (8) in zumindest einem Teil der Eingangssammellager (4) und/oder die Transformationseinrichtung in zumindest einem Teil der Abgangssammellager (3) ferner angepasst ist, um selbsttätig zumindest in regelmäßigen Zeitabständen über ein Datenübertragungsnetz (15, 16) auf die Datenbank (14) zuzugreifen und anhand der elektronischen Kennungen der dort gespeicherten elektronischen Dateien festzustellen, ob neu in der Datenbank (14) gespeicherte elektronische Dateien Empfängern (2) entsprechen, die dem Eingangssammellager (4) zugeordnet sind, in dem sie angeordnet ist, bzw. Absendern (1) entsprechen, die dem Abgangssammellager (3) zugeordnet sind, in dem sie angeordnet ist, und die elektronischen Dateien, für die die Feststellung positiv ist, aus der Datenbank (14) abzurufen.
